# EUROPEAN PATENT APPLICATION

(11) **EP 1 675 052 A2**
(43) Date of publication of application: **28.06.2006**
(21) Application number: 05028057.7
(22) Date of filing: 21.12.2005
(51) Int. Cl.: G06Q 10/00

(54) **Apparatus and method for processing schedule-related event in wireless terminal**

(30) Priority: 21.12.2004 KR 2004109601; 06.12.2005 KR 2005118137
(71) Applicant: Samsung Electronics Co., Ltd., Suwon-si, Gyeonggi-Do (KR)
(72) Inventor: Kim, Jae-Ho Samsung Electronics Co., Ltd., Suwon-si Gyeonggi-do (KR); Seo, Jeong-Wook Samsung Electronics Co., Ltd., Suwon-si Gyeonggi-do (KR); Kim, Hyun-Ji Samsung Electronics Co., Ltd., Suwon-si Gyeonggi-do (KR)
(74) Representative: Lang, Johannes

(57) **Abstract**

An apparatus and a method are provided for processing schedule-related events by performing an avatar agent function. In the apparatus and method, a character agent function is added to a wireless terminal. When an event is generated in the wireless terminal, the generation and processing of the event is expressed by means of a corresponding avatar UI. Accordingly, when schedule-related events are generated, it is possible to express the events through the character agent function.

## Description

### BACKGROUND OF THE INVENTION

### Field of the Invention:

The present invention relates to an apparatus and method for an agent in a wireless terminal. More particularly, the present invention relates to an apparatus and method for performing an avatar agent function, thereby processing schedule-related events.

### Description of the Related Art:

Typically, a wireless terminal represents an apparatus which a user can carry, and a representative apparatus is exemplified by a mobile phone. Such mobile phones are being further developed in order to provide various functions in addition to a normal phone function. A mobile phone having such additional functions may include a camcorder phone equipped with a camera, a TV phone providing TV programs, an MP3 phone providing an MP3 music file play function, a Digital Multimedia Broadcasting (DMB) phone providing a satellite broadcasting and/or terrestrial broadcasting reception function, and so forth. That is, mobile phones are being developed into products having additional functions for processing multimedia data.

Typically, a wireless terminal with various additional functions as described above includes a Liquid Crystal Display (LCD). Further, various schemes have been developed which effectively display various additional functions, the status of the wireless terminal, and so forth, on an LCD display unit so that a user can easily recognize them. A wireless terminal has also been developed such that it can display various types of user data. User data displayed on the wireless terminal mainly includes visual user data such as photograph, character and animation data. Among the user data as described above, avatar image data exists and wireless terminals using the avatar image data are being developed.

Accordingly, a need exists for a system and method for effectively and efficiently using avatar image data.

### SUMMARY OF THE INVENTION

Accordingly, it is an object of the present invention to substantially solve the above and other problems, and provide a system and method for expressing schedule-related events, which occur in a wireless terminal, through a character agent function.

It is another object of the present invention to provide a system and method for analyzing schedule-related events, which occur in a wireless terminal, and selecting and expressing a character User Interface (UI) preset by an optimal specialist requesting operations according to the occurred events to be performed.

It is yet another object of the present invention to provide a system and method in which, when preset schedule-related events occur in a wireless terminal, the occurrence of the events is reported so that a user can easily become aware of it, and the user can easily set schedules.

In order to accomplish the aforementioned and other objects, according to one aspect of embodiments of the present invention, an apparatus is provided for processing schedule-related events in a wireless terminal, the apparatus comprising a memory for storing a character UI image according to the schedule-related events, an event collector for collecting the schedule-related events and generating event messages for identifying the schedule-related events, an event controller for proving a plurality of specialists for the schedule-related event, determining a specialist corresponding to the event message among the specialists, and selecting and outputting a character UI based on the schedule-related event, which is included in the determined specialist, and an agent expression part for accessing and outputting a character image and text corresponding to the character UI based on the schedule-related event.

In order to accomplish the aforementioned and other objects, according to another aspect of embodiments of the present invention, a method is provided for processing schedule-related events in a wireless terminal, the method comprising the steps of, when the schedule-related events occur, storing the schedule-related events, checking preset specialists in order to process each schedule-related event, calling the checked specialists and allowing the specialists to process the schedule-related events, and checking processing results according to the specialists having processed the schedule-related events and displaying processing result-related expressions preset according to the specialists based on the processing results.

### BRIEF DESCRIPTION OF THE DRAWINGS

The above and other objects, features and advantages of the present invention will become more apparent from the following detailed description taken in conjunction with the accompanying drawings, in which:
FIG. 1 is a block diagram illustrating the construction of a wireless terminal according to an embodiment of the present invention;
FIG. 2 is a block diagram illustrating the construction of an agent function unit included in a controller of a wireless terminal according to an embodiment of the present invention;
FIG. 3 is a flow diagram illustrating a schedule-beginning timer event processing operation performed by an agent function unit according to an embodiment of the present invention;
FIG. 4 is a flow diagram illustrating a schedule-ending timer event processing operation performed by an agent function unit according to an embodiment of the present invention;
FIG. 5 is a flow diagram illustrating a schedule beginning and ending timer event processing operation performed by a controller according to an embodiment of the present invention;
FIG. 6 is a flow diagram illustrating a schedule beginning and ending timer event processing operation performed by an agent function unit according to another embodiment of the present invention;
FIGs. 7A and 7B are flow diagrams illustrating a schedule beginning and ending timer event processing operation performed by a controller according to another embodiment of the present invention;
FIG. 8 is a flow diagram illustrating a timer event processing operation for a holiday notification performed by an agent function unit according to an embodiment of the present invention;
FIG. 9 is a flow diagram illustrating a holiday timer processing operation performed by a controller according to an embodiment of the present invention;
FIG. 10 is a flow diagram illustrating an anniversary timer event processing operation performed by an agent function unit according to an embodiment of the present invention;
FIG. 11 is a flow diagram illustrating an anniversary timer event processing operation performed by an agent function unit according to another embodiment of the present invention;
FIG. 12 is a flow diagram illustrating an anniversary timer event processing operation performed by a controller according to an embodiment of the present invention;
FIG. 13 is a flow diagram illustrating a timer event processing operation for indicating additional schedule registration according to registered schedules performed by an agent function unit according to an embodiment of the present invention;
FIG. 14 is a flow diagram illustrating an entire schedule timer event processing operation performed by a controller according to an embodiment of the present invention;
FIG. 15 is a flow diagram illustrating a TO-DO timer event processing operation performed by an agent function unit according to an embodiment of the present invention;
FIG. 16 is a flow diagram illustrating a TO-DO processing operation performed by a controller according to an embodiment of the present invention;
FIGS. 17A-17D are diagrams illustrating screens displayed according to a schedule beginning and ending timer event processing operation performed by an agent function unit of an embodiment of the present invention;
FIGS. 18A-18C are diagrams illustrating screens displayed according to a holiday timer event processing operation performed by an agent function unit of an embodiment of the present invention;
FIGS. 19A-19C are diagrams illustrating screens displayed according to an anniversary timer event processing operation performed by an agent function unit of an embodiment of the present invention;
FIGS. 20A-20C are diagrams illustrating screens displayed according to a schedule addition timer event processing operation performed by an agent function unit of an embodiment of the present invention; and
FIGS. 21A-21D is a diagram illustrating screens displayed according to a TO-DO timer event processing operation performed by an agent function unit of an embodiment of the present invention.

Throughout the drawings, like reference numerals will be understood to refer to like parts, components and structures.

### DETAILED DESCRIPTION OF THE EXEMPLARY EMBODIMENTS

Hereinafter, exemplary embodiments according to the present invention will be described with reference to the accompanying drawings.

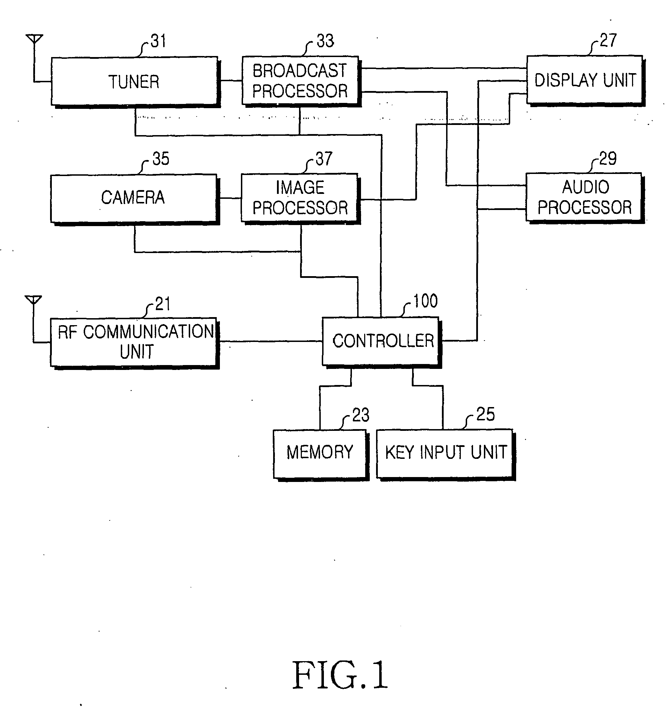

FIG. 1 is a block diagram illustrating the construction of a wireless terminal for expressing character agents based on events occurred therein according to an embodiment of the present invention. Referring to FIG. 1, the construction comprises a Radio Frequency (RF) communication unit 21, a memory 23, a key input unit 25, a display unit 27, an audio processor 29, a tuner 31, a broadcast processor 33, a cameral 35, an image processor 37, and a controller 100. The Radio Frequency (RF) communication unit 21 performs a wireless communication function of the wireless terminal. The RF communication unit 21 comprises an RF transmitter for up-converting and amplifying the frequency of transmitted signals, an RF receiver for low-noise amplifying received signals and down-converting the frequency of the received signals, and so forth. The key input unit 25 comprises keys for inputting number and character information, and function keys for establishing various functions. The key input unit 25 also comprises keys for controlling character agents according to events based on an embodiment of the present invention.

The memory 23 may comprise a program memory and a data memory. The program memory stores programs for a call processing and so forth, of the wireless terminal, and programs for controlling an agent expression for events that have occurred according to an embodiment of the present invention. The data memory temporarily stores data occurring while performing operations of the wireless terminal. Further, the data memory comprises a character memory for storing character images for the agent expression according to an embodiment of the present invention. The character memory may function as a file system and may comprise indices of a memory (file system) according to the characters. The character memory may be constructed in various types in order to express motions, expression and objects, which are details of each character. That is, character information stored in the character memory may be stored according to characters capable of expressing agents.

The controller 100 controls general operations of the wireless terminal. The controller 100 comprises both a modem for modulating and demodulating signals, and a codec for coding and decoding signals. Accordingly, the controller 100 codes and modulates transmission signals, and demodulates and decodes received signals. The controller 100 may be a Mobile Station Modem (MSM) chip, but is not limited thereto. The controller 100 controls operations of a communication mode, a camera mode and a broadcasting reception mode, according to a mode selection performed by a user. Herein, a data processor comprising the modem and the codec, which are separated from the controller 100, may also be disposed between the RF communication unit 21 and the controller 100.

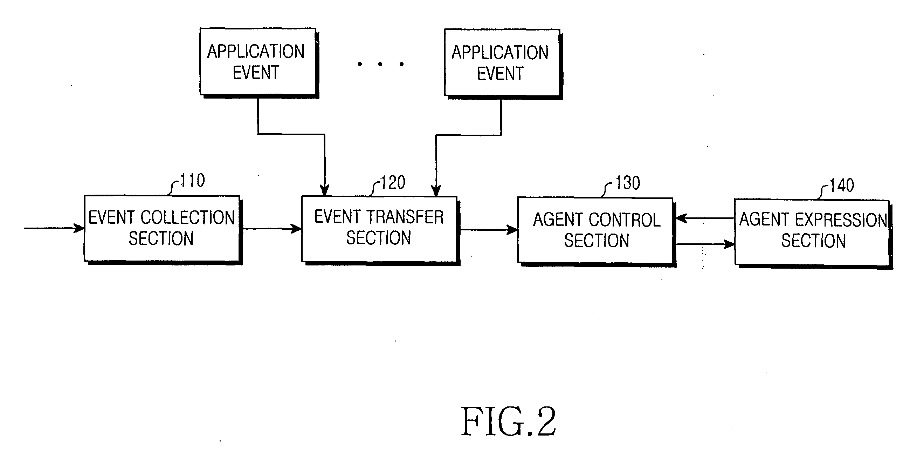

The controller 100 may comprise an event controller that is capable of processing schedule-related events according to an embodiment of the present invention. The controller 100 collects events based on the operations of the wireless terminal, controls agents based on the collected events, and expresses the processing and status of the event by means of the agent according to an embodiment of the present invention. Herein, the agent may be displayed by means of a character selected from the memory 23. The event controller may be included in the controller 100 or may be separately provided. The event controller is described in greater detail below with reference to FIG. 2.

The controller 100 can perform the same operations as an agent function unit according to an embodiment of the present invention. That is, the controller 100 can control the display of both a message for indicating a reception notification mode change based on the beginning and ending of a schedule, and a character corresponding to the message according to an embodiment of the present invention. Further, the controller 100 can check an anniversary set by a user, and can control the display of both a message used for raising an alarm for the anniversary a few days before the anniversary or on the actual day of the anniversary, and a character corresponding to the message. Likewise, the controller 100 can determine preset holidays according to countries and situations, and can control the display of both a message used for raising an alarm for the holiday a few days before the holiday or on the actual day of the holiday, and a character corresponding to the message. When the alarm for the anniversary or the holiday has been raised, the controller 100 controls the display of both a message for indicating an addition of schedules of the corresponding day, and a character corresponding to the message. The controller 100 checks a list of things-to-do (TO-DO) set by a user at each predetermined time, and controls a list of the current day's or the other day's uncompleted TO-DO in such a manner to be displayed by means of a character corresponding to the TO-DO according to the check time point. When the list of the TO-DO is displayed, the controller 100 receives deletion, completion time points, and so forth, of the TO-DO from the user, and stores the received content in the memory 23.

When a user selects a camera mode, the camera 35 is driven by the controller 100. The camera 35 photographs an object and generates image signals for the photographed object. The image processor 37 scales the image signals according to the size of the display unit 27, and displays the image signals through the display unit 27. In a storage mode, the image processor 37 codes the image signals by a preset coding scheme and stores the coded image signals. In a reproduction mode of received or stored image data, the image processor 37 decodes coded image data.

The tuner 31 selects and receives broadcast signals of a preset channel under the control of the controller 100 in a broadcast reception mode, and the broadcast processing unit 33 demodulates and decodes the broadcast signals received in the tuner 31, outputs image signals to the display unit 27, and outputs audio signals to the audio processor 29. The broadcast signals may include satellite broadcast signals or terrestrial broadcast signals.

The display unit 27 may display menus according to the operations of the wireless terminal under the control of the controller 100. When an event occurs, the display unit 27 displays a character output according to the event. Further, the display unit 27 displays the image signals output from the image processor 37 or the broadcast processing unit 33 in the camera mode or the broadcast reception mode.

In a communication mode, the audio processor 29 processes audio signals generated in the communication mode under the control of the controller 100. In the camera mode, the audio processor 29 processes audio signals generated from the camera photographing under the control of the image processor 37. In the broadcast reception mode, the audio processor 29 processes received broadcast audio signals under the control of the broadcast processing unit 33.

In the wireless terminal having the construction as described above, it is possible to omit the elements for processing the camera and/or broadcast signals. Even in this case, the character agent function for the event according to an embodiment of the present invention can be performed. In the following description, it is assumed for example, that the character is an avatar, but is not limited thereto. In an exemplary embodiment of the present invention, a character agent control for the event of the wireless terminal will be described by means of an avatar agent control. However, even when all images other than the avatar are used, the character agent control can be performed in substantially the same way.

FIG. 2 is a block diagram illustrating the construction of an agent function unit included in the controller 100 of the wireless terminal according to an embodiment of the present invention. Referring to FIG. 2, the agent function unit comprises an event collector section 110, an event transfer section 120, an agent control section 130, and an agent expression section 140. The event collector 110 collects events occurring in the wireless terminal. The event comprises all possible events which may occur in the wireless terminal, such as communication events of the wireless terminal, events occurring in the wireless terminal itself, events occurring at a user's request, events occurring according to the implementation of the multimedia function of the wireless terminal, and so forth. That is, the events collected by the event collector 110 are events defined in the wireless terminal. When an event has occurred, the event collector 110 generates an event message as information for identifying the occurred event, and provides the event message to the event transfer section or part 120. The event collector 110 according to an embodiment of the present invention, collects a schedule-related event, and this event may include a beginning and ending event of a schedule, a reception notification mode change event based on the beginning and ending of the schedule, a holiday timer event, an anniversary timer event, and a TO-DO timer event.

The event transfer part 120 transfers the event message provided from the event collector 110 to a corresponding client. In an embodiment of the present invention, the event transfer part 120 transfers the event message only to an agent controller section 130. However, the event transfer part 120 may also transfer the event message to other elements intended for reception of the event message. Further, the event transfer part 120 receives user-defined events undefined in the wireless terminal in addition to the events collected in the event collector 110, and transfers the received user-defined events to the agent controller 130. Hereinafter, the user-defined event will be referred to as an application event. The application events may comprise events that have occurred by performing a game, another application program, or a web service program.

If the event message is received from the event transfer part 120, the agent controller 130 stores the received event message in an internal buffer, analyzes the event message, and determines a User Interface (UI) in order to express a corresponding character agent. The event message transferred from the event transfer part 120 may be the events (that is, the events collected by the event collector 110) of the wireless terminal and the application events. The following description will be given with a focus on an agent expression of the event collected by the event collector 110. The agent controller 130, which includes a plurality of specialists, controls the specialists, selects a specialist corresponding to an occurred event, and performs an agent control function. When an event is received, the agent controller 130 notifies the proper specialists of the reception of the event according to the received event, and transmits a request for UI information to the agent expression section or part 140 in order to display the agent expression of the finally selected specialist. The agent expression part 140 processes received user feedback information for the corresponding event according to the user feedback information.

The agent expression part 140 displays a character expression for the corresponding event according to the agent UI information output from the agent controller 130. Herein, the agent expression part 140 manages a plurality of avatar UIs to be displayed on the display unit 27, and controls the display of a corresponding avatar according to the UI information requested by the agent controller 130. If a user generates feedback information in a state of displaying the avatar according to the received event, the agent expression part 140 transmits the received feedback information to the agent controller 130. The agent controller 130 performs an agent control according to the user feedback information received from the agent expression part 140.

In the construction example of FIG. 2, when only the event of the wireless terminal collected by the event collector 110 is processed, the event transfer part 120 may be removed. Hereinafter, the internal buffer of the agent controller 130 will be referred to as a blackboard, and the construction and operation of the agent controller 130 will be described in greater detail.

The agent controller 130 comprises a plurality of specialists, a blackboard, a supervisor, an avatar numerical value storage part, a specialist manager, and so forth. Each of the specialists is called according to events, performs a specialized task, and outputs the results. The blackboard stores various information including information of event messages. When the specialists output effective results, the supervisor selects one of the specialists. The avatar numerical value storage part stores numerical values of avatars according to occurred events. Further, the specialist manager selects corresponding specialists from a specialist list according to events when the events occur, and controls an agent according to the events.

The specialist represents a specialist for contributing to solving problems, stores an answer of an intermediate step in the blackboard based on an expertise in a specific field, and simultaneously expresses priority and user preference for the answer of the intermediate step. Further, each specialist understands the status of the blackboard, computes the priority and user preference, and stores the answer of the intermediate step in the blackboard.

The blackboard represents a work place and an information space used when the specialists communicate with each other, and basically enables the specialists to store the answer in the intermediate step in the blackboard. Advantages of a blackboard pattern are as follows. First, it is possible to easily integrate different types of specialists. Next, since specialists do not affect each other, the specialists may be modularized and developed, and last, it is possible to flexibly respond to various changes (for example, using an algorithm change of specialists, an addition of a new specialist, and so forth).

When two or more specialists are selected for one event, the specialist manager requests the supervisor to select a specialist having the closest connection with the received event. Then, the supervisor analyzes data of the blackboard, priority and user preference according to events, and so forth, and selects the specialist having the closest connection with the received event.

Herein, the avatar numerical value is altered by various events occurring from the wireless terminal, the agent function, and the feedback of a user. In addition, various application events that are capable of using the avatar numerical value have influence on the avatar numerical value. Further, as an internal numerical value changes, an avatar interface also changes, and an avatar grows as time goes by. This corresponds to a growth concept of an avatar. The wireless terminal according to an embodiment of the present invention introduces an avatar growth based on an artificial intelligence agent system. For this purpose, in an embodiment of the present invention, a proposal for various actions is provided to a user on the basis of various events occurring in the wireless terminal, so that it is possible to enable the user to effectively use the wireless terminal according to an interest. Further, the avatar numerical value is altered according to these events and feedback actions of a user based on the events.

Table 1 below shows, by way of example, detailed cases according to an embodiment of the present invention. Table 1 below shows use cases of an event, an event classification, an event determination time point, an event processing time point, event parameters (necessary information), frequency and time, conditions, UI texts, user selection, and so forth. However, it is possible to add or delete other necessary or desired events other than the events as described above.

**Table 1**

| ID | Use case | Classification | Controller necessary information | UI text | User selection |
|---|---|---|---|---|---|
| 19 | Notification before one week or one day of holiday | Schedule | | Master, [holiday] comes after one week/Master, [holiday] is the next day | Schedule registration / check (a week ago) schedule viewing / check |
| 20 | Notification before one week or one day of anniversary | Schedule | | Master, [anniversary] comes after one week/Master, [anniversary] is the next day | Check |
| 21 | Propose registration of weekend schedule on Thursday | Schedule | | Master, what are you doing on the weekend ? schedule registration ? | Yes / No |
| 23 | Propose change to vibration or proper state when schedule begins | Schedule | | [schedule] begins. Change to manner mode ? | Yes / No |
| 24 | Change bell mode to proper state when schedule ends | Schedule | | [schedule] ends. Release manner mode ? | Yes / No |
| 26 | Propose registration of TO-DO when schedule ends | Schedule | | Is schedule done well ? What are you doing ? | Registration of TO-DO / new schedule registration / memo / check |
| 27 | Propose check for entire schedule at user setup time. If many schedules exist, output "busy" | Schedule | | Check schedule ? / (if no schedule) no schedule | Yes / No (if no schedule) check |
| 28 | Propose registration of schedule at user setup time. | Schedule | | Schedule registration ? | Yes / No |
| 49 | Propose A/S every six months from first booting of phone | Schedule | | Master, complaint in use of cell phone ? Check A/S-related information ? | Yes / No |
| 50 | Find birthday (special day) and notify on the actual day of birthday | Schedule | Phone book data | [Name], it's a special day. | Phone / message transmission / check |
| 33 | If evening comes with TO-DO uncompleted, ask completion or incompletion | TO-DO | | Many incomplete TO-DO exist. Check it? | Yes / No |
| 34 | Check completion or incompletion for incomplete TO-DO in the morning | TO-DO | | Yesterday's incomplete TO-DO exist. Check it? | Yes/No |

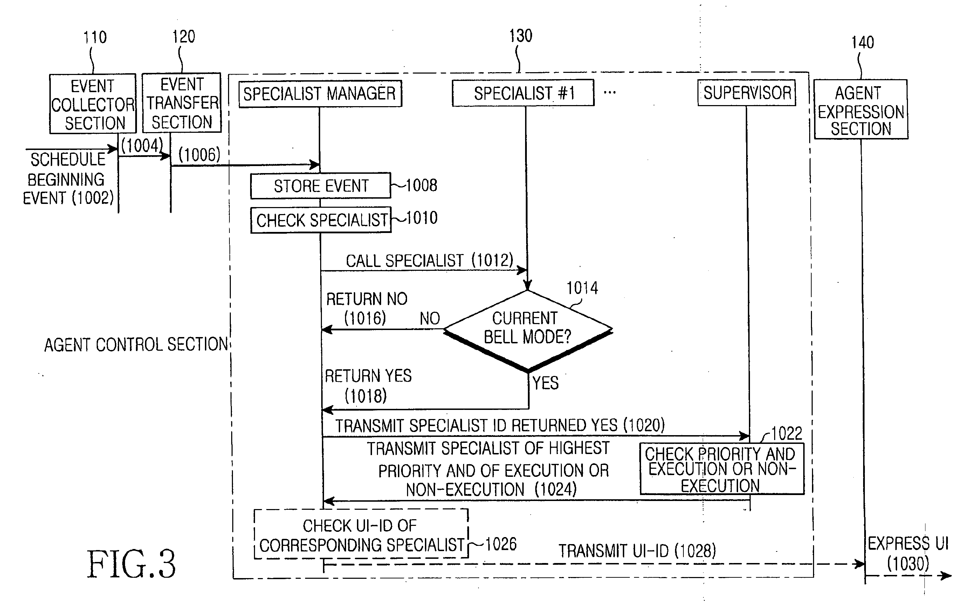

In a description of a schedule-related event processing operation in the wireless terminal according to an embodiment of the present invention, a schedule-related event processing operation performed under the control of the agent function unit and a schedule-related event processing operation performed under the control of the controller 100 will be described in greater detail with reference to FIGs. 3 to 21.

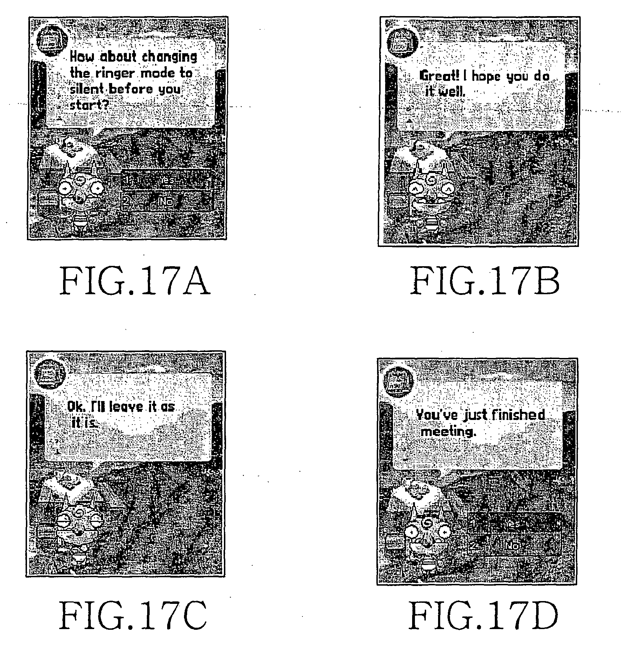

FIG. 3 is a flow diagram illustrating a schedule-beginning timer event processing operation performed by the agent function unit according to an embodiment of the present invention, and FIGS. 17A-17D are diagrams illustrating screens displayed according to a schedule beginning and ending timer event processing operation performed by the agent function unit of an embodiment of the present invention. In FIG. 3, a first mode corresponds to a bell mode and a second mode corresponds to a vibration mode. However, the first and the second modes may be set as a mode designated by a user in the reception notification mode, in addition to the bell mode and the vibration mode. Referring to FIGs. 2, 3 and 17, in step 1002, the event collector 110 collects a schedule-beginning timer event occurring in the beginning of a specific schedule of the schedules pre-registered by the user. In step 1004, the event collector 110 provides the collected schedule-beginning timer event to the event transfer part 120. In step 1006, the event transfer part 120 provides the received schedule-beginning timer event to the specialist manager of the agent controller 130. In step 1008, the specialist manager stores the received schedule-beginning timer event in the blackboard. In step 1010, the specialist manager checks the specialists called in the schedule-beginning timer event from an internal specialist list. In step 1012, the specialist manager calls each specialist (in FIG. 3, a first specialist is called).

In step 1014, the first specialist determines if the current mode is the bell mode. When the current mode is not the bell mode, the first specialist returns "NO'" to the specialist manager in step 1016. However, when the current mode is the bell mode, the first specialist returns "YES" to the specialist manager in step 1018.

Then, the specialist manager provides the specialist (in FIG. 3, the first specialist) having returned "YES" to the supervisor in step 1020. In step 1022, the supervisor checks priorities of corresponding specialists, or checks if a corresponding specialist has been executed when one specialist has returned "YES". In step 1024, the supervisor transmits results from the check either for a specialist of the highest priority or regarding whether the corresponding specialist has been executed, to the specialist manager. In step 1026, the specialist manager checks a UI-ID preset for the specialist of the highest priority or UI-IDs preset according to specialists to be executed. In step 1028, the specialist manager transmits the checked UI-IDs to the agent expression part 140. In step 1030, the agent expression part 140 expresses a corresponding UI. The UI expressed by the agent expression part 140 may include content indicating a change from the current bell mode to the vibration mode as illustrated in FIG. 17A. Further, FIGS. 17B or 17C may be displayed according to the change of the mode by the user based on the displayed content. In the beginning of a schedule according to the operation of FIG. 3, the user can check the content indicating the change from the bell mode to the vibration mode.

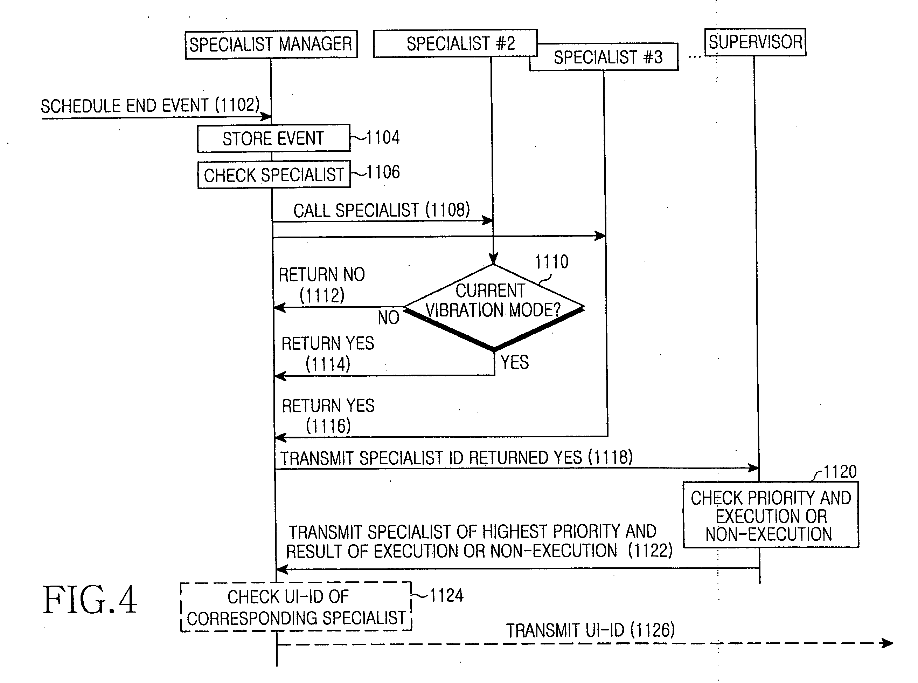

FIG. 4 is a flow diagram illustrating the schedule-ending timer event processing operation performed by the agent function unit according to an embodiment of the present invention. For convenience of description, FIG. 4 illustrates operations in the agent controller 130. The event provided to the corresponding agent controller 130 may be provided through the event collector 110, the event transfer part 120, and so forth, as illustrated in FIG. 3. In FIG. 4, a first mode corresponds to the bell mode and a second mode corresponds to the vibration mode. However, the first and the second modes may be set as a mode designated by a user in the reception notification mode, in addition to the bell mode and the vibration mode. Referring to FIG. 4, if a schedule-ending timer event is transferred in step 1102, the specialist manager stores the received schedule-ending timer event in the blackboard in step 1104. In step 1106, the specialist manager checks specialists called in the schedule-ending timer event from the internal specialist list. In step 1108, the specialist manager calls each specialist (in FIG. 4, a second specialist and a third specialist are called).

In step 1110, the second specialist determines if the current mode is the vibration mode. When the current mode is not the vibration mode, the second specialist returns "NO" to the specialist manager in step 1112. However, when the current mode is the vibration mode, the second specialist returns "YES" to the specialist manager in step 1114. When the third specialist is called, the third specialist returns "YES" to the specialist manager in step 1116.

Then, the specialist manager provides the specialists (in FIG. 4, the second specialist and the third specialist) having returned "YES" to the supervisor in step 1118. In step 1120, the supervisor checks priorities of corresponding specialists, or checks if a corresponding specialist has been executed when one specialist has returned "YES". In step 1122, the supervisor transmits results from the check either for a specialist of the highest priority or regarding whether the corresponding specialist has been executed to the specialist manager. In step 1124, the specialist manager checks a UI-ID preset for the specialist of the highest priority or UI-IDs preset according to specialists to be executed. In step 1126, the specialist manager transmits the checked UI-IDs to the agent expression part 140. Then, the agent expression part 140 expresses a corresponding UI.

In the UI expressed by the agent expression part 140, for example in an expression of the UI corresponding to the second specialist, it is possible to display both a message reporting the ending of the schedule and a character corresponding to the message as illustrated in FIG. 17D. Further, the UI may include content indicating a change from the current vibration mode to the bell mode.

In addition, in the expression of the UI corresponding to the second specialist, a schedule-related menu list is displayed, so that it is possible to display a UI and a message, which include content indicating an execution of a function corresponding to the displayed list. For example, the displayed schedule-related menu list may include taking a memo, registration of TO-DO, schedule registration, check of schedules stored in advance, and an ending as shown in Table 2 below by way of example.

**Table 2**

| Order | Schedule-related menu list |
|---|---|
| 1 | Taking a memo |
| 2 | Registration of TO-DO |
| 3 | Schedule registration |
| 4 | Next schedule check |
| 5 | Ending |

Table 2 shows a schedule-related menu list displayed when a schedule ends. The second specialist executes a menu selected from the schedule-related menu list by a user, and displays a message and a UI character corresponding to the menu. When the menu "taking a memo" is first selected by the user, the second specialist causes the agent expression part 140 to display sub-items including an image memo item, an audio memo item and a text memo item as shown in Table 3 below by way of example.

**Table 3**

| Order | Taking a memo |
|---|---|
| 1 | Image memo |
| 2 | Audio memo |
| 3 | Text memo |

In Table 3, the sub-item may include the image memo item for storage of an image photographed by the camera 35, the audio memo item for storage of audio input through a microphone, and the text memo item for storage of texts input from a user. Accordingly, the third specialist receives one of the sub-items in the menu "taking a memo", which is selected by the user, and causes the agent expression part 140 to display both a message used for reporting an execution of taking a memo corresponding to the selected item and a character UI corresponding to the message. Accordingly, the third specialist receives a memo from the user and stores the received memo in the memory 23.

When the menu "registration of TO-DO" is selected from the displayed list in Table 2 by the user, the third specialist causes the agent expression part 140 to display both a message used for reporting an execution of a sub-menu based on the selected "registration of TO-DO" and a character UI corresponding to the message. Accordingly, the third specialist receives TO-DO from the user and stores the received TO-DO in the memory 23.

When it is determined that the menu "schedule registration" has been selected, the third specialist causes the agent expression part 140 to display both a message used for reporting an execution of a sub-menu for the schedule registration and a character UI corresponding to the message. Accordingly, the third specialist receives additional schedules from the user and stores the received additional schedules in the memory 23.

When it is determined that the menu "schedule check" has been selected, the second specialist displays the schedule list stored in the memory 23 in advance, and causes the agent expression part 140 to display a message and a character UI according to the displayed schedule list. When it is determined that the menu "ending" has been selected, the second specialist causes the agent expression part 140 to display a message used for reporting the ending of a schedule and a character UI corresponding to the message.

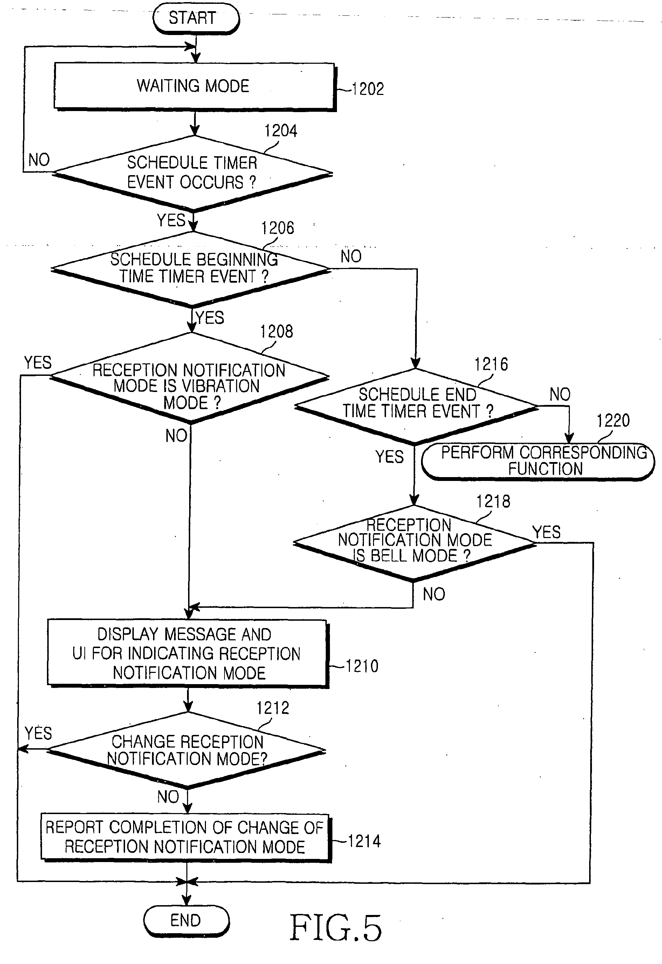

When the schedule-ending timer event occurs as described above, it is possible to report the ending of the schedule and display a message for indicating an addition of additional schedules and TO-DO, a memo, and so forth, and a character UI corresponding to the message. The message displayed according to the occurrence of the schedule-ending timer event based on the operation of the agent function unit may be applied when a schedule-ending event occurs in FIGs. 5 to 7B. As a result, when the schedule-ending timer event occurs in the controller, the message and the character UI corresponding to the message is displayed on the display unit 27 under the control of the controller 100.

FIG. 5 is a flow diagram illustrating a schedule beginning and ending timer event processing operation performed by the controller according to an embodiment of the present invention. Referring to FIG. 5, in step 1202, the controller 100 controls the wireless terminal to enter a waiting mode. In the waiting mode, the controller 100 determines if a schedule preset by a user exists and checks if alarm conditions of the schedule are satisfied. In step 1204, the controller 100 determines if a timer event reporting existence of the schedule has occurred according to results of the check. In step 1206, the controller 100 determines if the occurred timer event corresponds to a timer event reporting the beginning of the schedule. When the occurred schedule timer event corresponds to the timer event reporting the beginning of the schedule, the controller 100 determines if the current reception notification mode of the wireless terminal is the vibration mode in step 1208. When the reception notification mode is not the vibration mode, the controller 100 displays a message for indicating a change to the vibration mode in step 1210.

When the occurred schedule timer event does not correspond to the timer event reporting the beginning of the schedule, the controller 100 checks that the schedule timer event corresponds to the timer event reporting the ending of the schedule in step 1216, and determines if the current reception notification mode is the bell mode in step 1218. When the reception notification mode is not the bell mode, the controller 100 displays a message for indicating a change to the bell mode in step 1210. In step 1212, the controller 100 determines if the reception notification mode has been changed by a user. In step 1214, the controller 100 reports the completion of the change of the reception notification mode according to whether the reception notification mode has been changed.

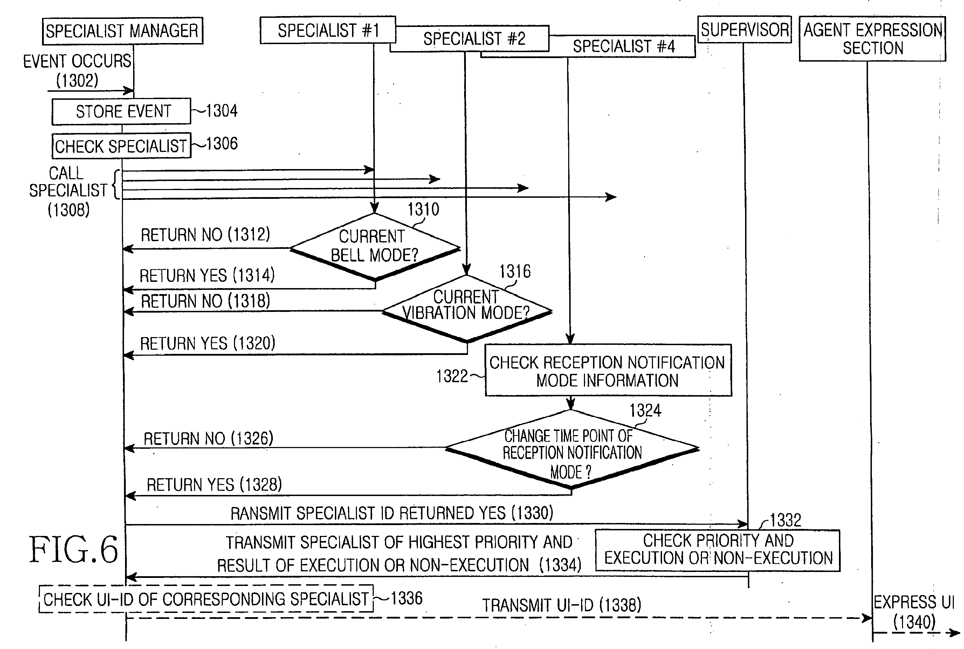

FIG. 6 is a flow diagram illustrating a schedule beginning and ending timer event processing operation performed by the agent function unit according to another embodiment of the present invention. Referring to FIG. 6, in steps 1302, 1304, 1306 and 1308, a specialist manager checks the occurrence of a time event, stores the time event, checks specialists corresponding to the occurred event, and calls the corresponding specialists, respectively. These steps are substantially similar to those of the processing operation FIGs. 3 and 4. However, in steps 1310, 1312, 1314, 1316, 1318 and 1320, the corresponding specialists (in FIG. 6, the first, second and fourth specialists are called) determine the status of the current reception notification mode according to the occurred timer event, and return "YES" or "NO" to the specialist manager according to the status of the reception notification mode. In step 1322, the fourth specialist checks setup information of the reception notification mode. In step 1324, the fourth specialist determines if the current time point is a time point at which the reception notification mode must be altered according to the checked setup information. As a result of the determination, the fourth specialist returns "YES" or "NO" to the specialist manager.

If each specialist called as described above returns "YES" or "NO", the specialist manager provides the specialist having returned "YES" to the supervisor in step 1330. In step 1332, the supervisor checks priorities of the corresponding specialists, or checks if a corresponding specialist has been executed when one specialist has returned "YES". In step 1334, the supervisor transmits results from the check either for a specialist of the highest priority or regarding whether the corresponding specialist has been executed to the specialist manager. In step 1336, the specialist manager checks a UI-ID preset for the specialist of the highest priority or UI-IDs preset according to specialists to be executed. In step 1338, the specialist manager transmits the checked UI-IDs to the agent expression part 140. In step 1340, the agent expression part 140 expresses a corresponding UI.

The fourth specialist can determine if other schedules exist at the schedule beginning and ending time before the schedule beginning and ending timer event occurs. When other schedules exist at the schedule beginning and ending time, the fourth specialist does not display a message used for indicating a change of the reception notification mode according to the schedule beginning and ending time and a character UI corresponding to the message. Instead, the fourth specialist may display a message used for reporting that other schedules exist at the schedule beginning and ending time and a character corresponding to the message.

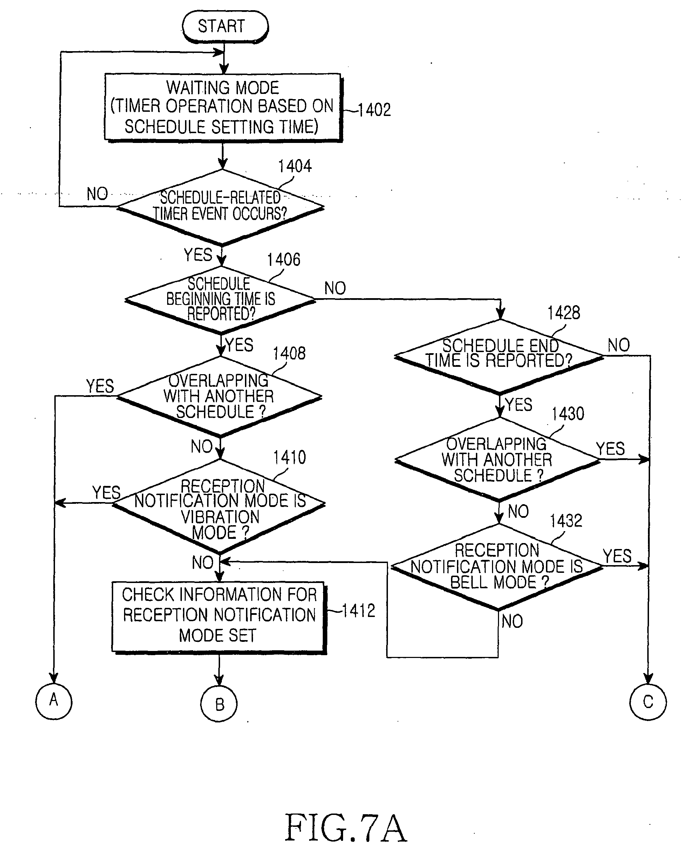

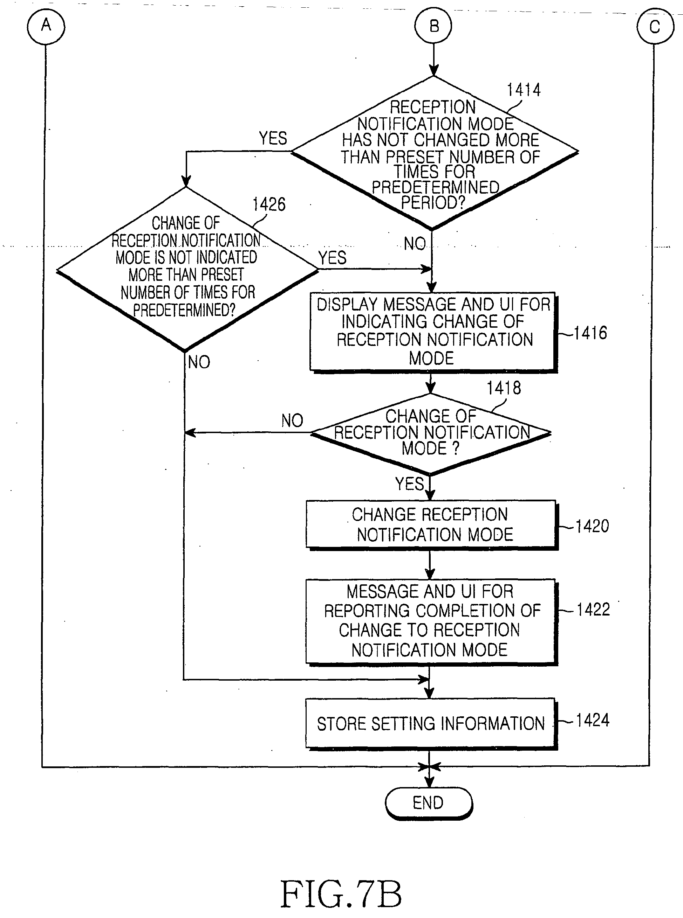

FIGs. 7A and 7B are flow diagrams illustrating a schedule beginning and ending timer event processing operation performed by the controller according to another embodiment of the present invention. Referring to FIGs. 7A and 7B, in step 1402, the controller 100 controls the wireless terminal to enter a waiting mode. In the waiting mode, a call reception and key input from a user are waited for. Further, a timer operation for checking beginning and ending time according to a preset schedule is performed. In step 1404, the controller 100 determines if a schedule-related timer event has occurred. When a schedule registered by a user occurs, the controller 100 determines if the occurred event corresponds to a timer event reporting a schedule beginning in step 1406. When the occurred event corresponds to the timer event reporting the schedule beginning, step 1408 is performed.

In step 1408, the controller 100 determines if multiple schedules have been registered by the user and if the beginning of the occurred schedule overlaps with the multiple schedules. When the beginning of the occurred schedule exists during the process of the overlapped schedule and the beginning time of the occurred schedule is later than the beginning time of the overlapped schedule, the controller 100 does not indicate the change of the reception notification mode and maintains the current set reception notification mode. However, when the beginning of the occurred schedule does not overlap with the multiple schedules, the controller 100 determines if the current reception notification mode is the vibration mode in step 1410.

When the current reception notification mode is not the vibration mode, the controller 100 checks information for the reception notification mode set by the user in step 1412. The information for the reception notification mode checked in step 1412 corresponds to accumulation information for both the number of times by which the user has checked a message and a UI for indicating a change of a reception notification mode according to a schedule when the schedule occurred in the past, and whether the mode of the wireless terminal has changed to the indicated reception notification mode more than a preset number of times for a predetermined period. Further, the information for the reception notification mode corresponds to accumulation information for the number of times by which the previously set reception notification mode has been maintained without indicating a change of the reception notification mode, when the mode of the wireless terminal has not changed to the indicated reception notification mode more than the preset number of times for the predetermined period.

In step 1414, the controller 100 determines if the mode of the wireless terminal has not changed to the indicated reception notification mode more than the preset number of times for the predetermined period. When the mode of the wireless terminal has not changed to the indicated reception notification mode more than the predetermined number of times, for example, less than three times, the controller 100 controls the display of the message for indicating the change of the reception notification mode and the UI corresponding to the message in step 1416. In step 1418, the controller 100 receives setting information for whether a user performs the change to the indicated reception notification mode. In step 1420, the controller 100 changes the reception notification mode according to the setting information of the user. In step 1422, the controller 100 controls the display of the message for reporting the completion of the change to the reception notification mode and the UI corresponding to the message. In step 1424, the controller 100 stores the setting information.

As a result of the determination in step 1414, when the mode of the wireless terminal has changed to the indicated reception notification mode more than the predetermined number of times for the predetermined period, for example, more than three times for two weeks, the controller 100 controls the display of the message for indicating the change of the reception notification mode and the UI corresponding to the message in step 1416. However, when the user has not changed the reception notification mode more than the predetermined number of times for the predetermined period, the controller 100 checks both the period for which the previous reception notification mode has been maintained and the number of times by which the previous reception notification mode has been maintained according to the period, without indicating the change of the reception notification mode, in step 1426. For example, when the number of times by which the previous reception notification mode has been maintained is more than three times for two weeks, the controller 100 controls the display of the message for indicating the change of the reception notification mode.

As a result of the determination in step 1406, when the occurred event does not correspond to the timer event reporting the schedule beginning, step 1428 is performed. In step 1428, the controller 100 determines if the occurred event corresponds to a schedule-ending timer event. When the occurred event corresponds to the schedule-ending timer event, the controller 100 determines if multiple schedules have been registered by the user and if the ending of the occurred schedule overlaps with the multiple schedules in step 1430. When the ending of the occurred schedule exists during the process of the overlapped schedule and the ending time of the occurred schedule is earlier than the ending time of the overlapped schedule, the controller 100 does not indicate the change of the reception notification mode and maintains the current set reception notification mode. However, when the beginning of the occurred schedule does not overlap with the multiple schedules, the controller 100 determines if the current reception notification mode is a bell mode in step 1432. When the current reception notification mode is not the bell mode, steps 1412, 1414, 1416, 1418, 1420, 1422 and 1424 are performed as described above. In this way, the controller 100 changes the reception notification mode to the bell mode or maintains the vibration mode.

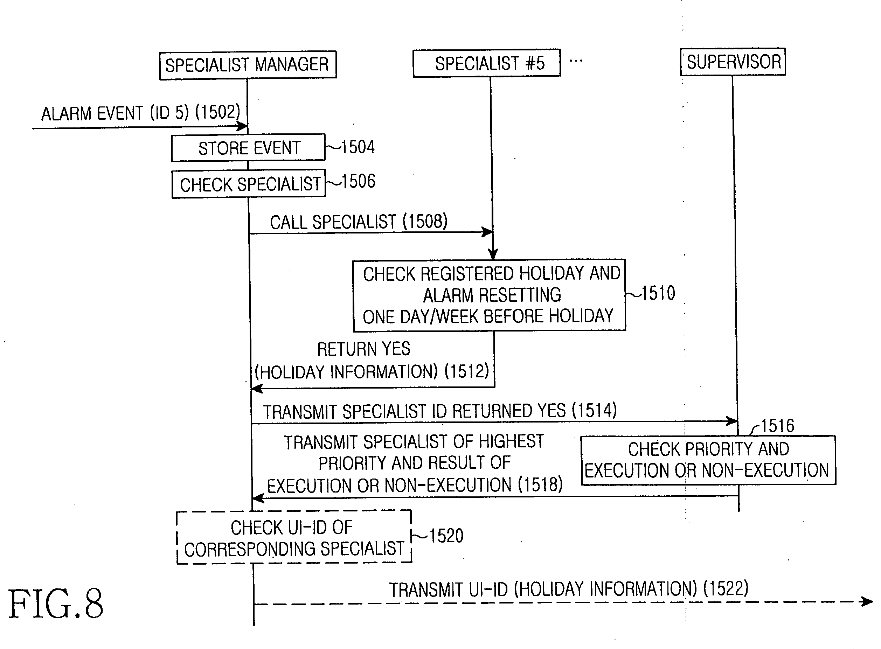

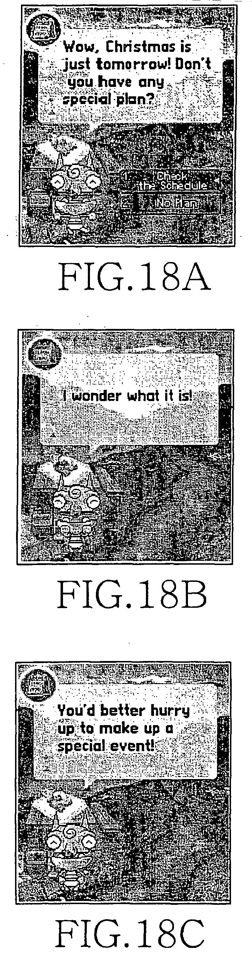

FIG. 8 is a flow diagram illustrating a schedule-beginning timer event processing operation performed by the agent function unit according to an embodiment of the present invention, and FIGS. 18A-18C are diagrams illustrating screens displayed according to the holiday timer event processing operation performed by the agent function unit of an embodiment of the present invention. For convenience of description, FIG. 8 illustrates operations in the agent controller 130. The event provided to the corresponding agent controller 130 may be provided through the event collector 110, the event transfer part 120, and so forth, as illustrated in FIG. 3. Referring to FIGs. 8 and 18A-18C, if a timer event (ID 5) is transferred in step 1502, the specialist manager stores the received timer event in the blackboard in step 1504. In step 1506, the specialist manager checks specialists called in the timer event of a fifth specialist from the internal specialist list. In step 1508, the specialist manager calls each specialist (in FIG. 5, the fifth specialist is called).

In step 1510, the fifth specialist checks a holiday nearest from the current date with reference to the registered schedule information, and sets an alarm again, for example, to a date of one week or one day, but not limited thereto, before the corresponding holiday. This alarm resetting is activated in order to perform a corresponding operation when a corresponding timer event occurs before one week or one day of the next holiday. In step 1512, the fifth specialist returns "YES" to the specialist manager. Herein, the fifth specialist may transmit information for this holiday together with "YES".

Then, the specialist manager provides specialists having returned "YES" to the supervisor in step 1514. In step 1516, the supervisor checks priorities of corresponding specialists or checks if the corresponding specialists have been executed. In step 1518, the supervisor transmits results from the check either for a specialist of the highest priority or regarding whether the specialist of the highest priority has been executed to the specialist manager. In step 1520, the specialist manager checks a UI-ID of the specialist of the highest priority or UI-IDs of specialists to be executed. In step 1522, the specialist manager transmits the checked UI-IDs to the agent expression part 140. Then, the agent expression part 140 expresses a corresponding UI. Herein, when the specialist manager transmits the checked UI-IDs to the agent expression part 140, the information for this holiday is simultaneously transmitted. Further, when the agent expression part 140 expresses the UI, the agent expression part 140 expresses both information for the corresponding holiday and content reporting that the holiday comes after one day or one week as illustrated in FIG. 18A. After the holiday alarm is performed, when a user selects a menu used for checking schedules set on the holiday, the agent expression part 140 expresses a message and an avatar used for checking the schedules as illustrated in FIG. 18B. When no schedule exist on the holiday, the agent expression part 140 may express a screen as illustrated in FIG. 18C.

As described above, it is possible to perform the operation for reporting that the holiday comes after one day or one week through the process as illustrated in FIG. 8. For example, the initial setting of the holiday timer event may be preset as the basic operation in the process of manufacturing the wireless terminal, and may also be set when a user performs an associated operation such as check of calendar information provided to the terminal. Further, after the alarm for the corresponding holiday is performed, it is possible to set a timer event of a holiday again, which is nearest to the corresponding holiday, and to raise an alarm for the set holiday on the actual day of the holiday.

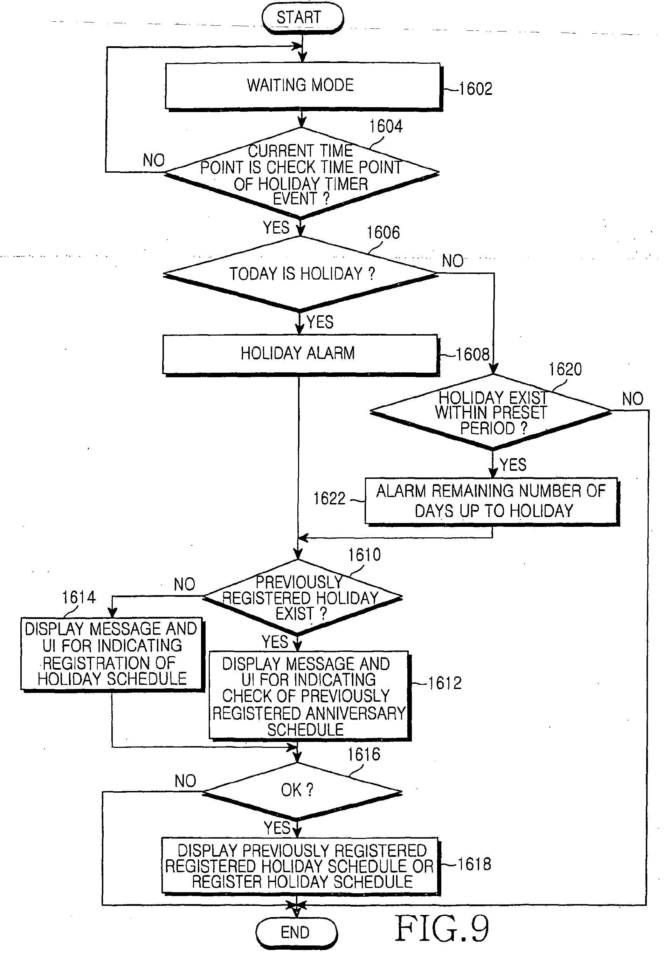

FIG. 9 is a flow diagram illustrating a holiday timer event processing operation performed by the controller according to an embodiment of the present invention. Referring to FIG. 9, in step 1602, the controller 100 controls the wireless terminal to enter a waiting mode. In step 1604, the controller 100 determines if the current time point is a check time point of a holiday timer event in the waiting mode. When the current time point is the check time point of the holiday timer event, the controller 100 determines if the current day has been set as a holiday in step 1606. When the current day is the holiday, the controller 100 reports that the current day is the holiday in step 1608. However, when the current day is not the holiday in step 1606, the controller 100 determines if the holiday exists within a preset period in step 1620. The preset period may be set, for example, to one week or one day before the corresponding holiday, but is not limited thereto. Any period of time can be preset. Accordingly, when the holiday exists within the preset period, the controller 100 reports the remaining number of days up to the holiday in step 1622.

In step 1610, the controller 100 determines if there exists schedules on the holiday, which have been registered by a user. When the registered schedules exist, the controller 100 controls the display of a message for indicating the check of the schedules and a character UI corresponding to the message in step 1612. However, when the registered schedules do not exist, the controller 100 controls the display of a message for indicating the registration of holiday schedules and a character UI corresponding to the message in step 1614.

In step 1616, the controller 100 determines if a key used for checking the messages displayed in steps 1612 and 1614 has been input. When the key has been input, the controller 100 registers the schedules or displays the registered schedules in step 1618.

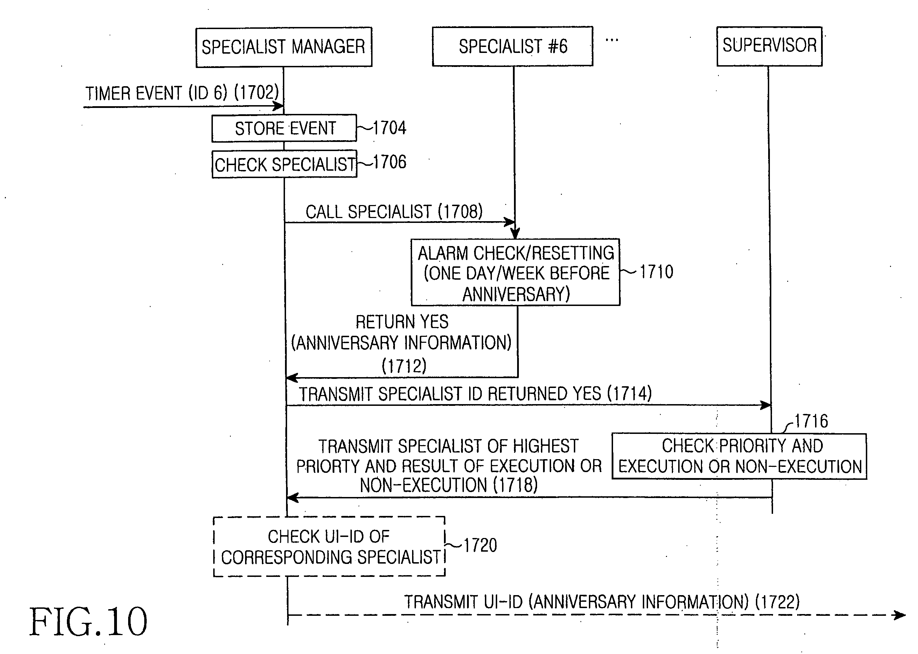

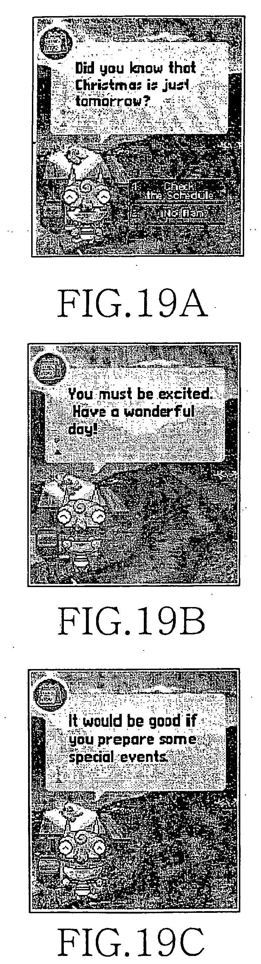

FIG. 10 is a flow diagram illustrating an anniversary timer event processing operation performed by the agent function unit according to an embodiment of the present invention, and FIGS. 19A-19C are diagrams illustrating screens displayed according to the anniversary timer event processing operation performed by the agent function unit of an embodiment of the present invention. For convenience of description, FIGs. 10 and 19A-19C illustrate only operations in the agent function unit 130. If a timer event (ID 6) is transferred in step 1702, the specialist manager stores the received timer event in the blackboard in step 1704. In step 1706, the specialist manager checks specialists called in the timer event from the internal specialist list. In step 1708, the specialist manager calls each specialist (in FIG. 10, a sixth specialist is called).

In step 1710, the sixth specialist checks an anniversary with reference to the registered schedule information, raises an alarm for the checked anniversary, and sets a timer again, for example, to a date of one week or one day, but is not limited thereto, before the corresponding anniversary for which the alarm has been raised. This timer resetting is activated in order to perform a corresponding operation when a corresponding timer event occurs before one week or one day of the next anniversary. In step 1712, the sixth specialist returns "YES" to the specialist manager. Herein, the sixth specialist may transmit information for the anniversary together with "YES".

Then, the specialist manager provides specialist IDs having returned "YES" to the supervisor in step 1714. In step 1716, the supervisor checks priorities of corresponding specialists or checks if the corresponding specialists have been executed. In step 1718, the supervisor transmits results from the check to the specialist manager. In step 1720, the specialist manager checks a UI-ID of a specialist of the highest priority or UI-IDs of specialists to be executed. In step 1722, the specialist manager transmits the checked UI-IDs to the agent expression part 140. Then, the agent expression part 140 expresses a corresponding UI as illustrated in FIG. 19A. Herein, when the specialist manager transmits the checked UI-IDs to the agent expression part 140, the information for the anniversary is simultaneously transmitted. Further, when the agent expression part 140 expresses the UI, the agent expression part 140 expresses both information for the corresponding anniversary and content reporting that the anniversary comes after one day or one week.

As described above, it is possible to perform the operation for reporting that the anniversary comes after one day or one week through the process as illustrated in FIG. 10. For example, the initial setting of the anniversary timer event may be implemented by receiving an anniversary set by a user. Further, when an alarm for the anniversary is raised before the preset period, it is possible to display a message for indicating the absence of the previously set schedule as illustrated in FIG. 19B or display the previously set schedule as illustrated in FIG. 19C, if a key used for checking the anniversary timer event is input.

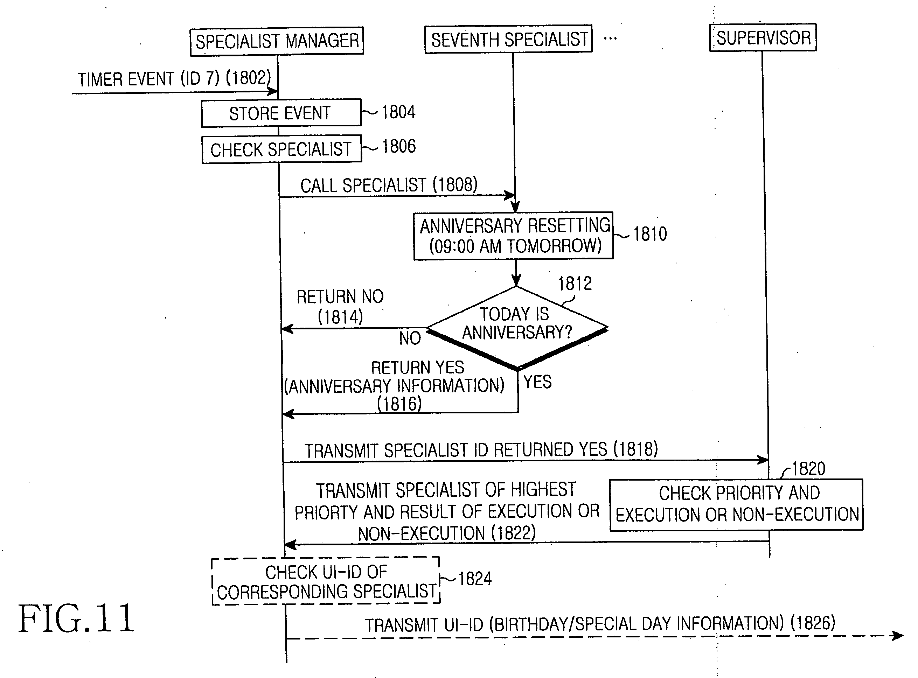

FIG. 11 is a flow diagram illustrating an anniversary timer event processing operation performed by the agent function unit according to another embodiment of the present invention. In FIG. 10, the alarm for the anniversary within the preset period is raised. However, in FIG. 11, a corresponding specialist is called at every preset time point in order to determine if the current day corresponds to an anniversary. Hereinafter, the operation will be described in detail with reference to FIG. 11. If a timer event (ID 7) is transferred in step 1802, the specialist manager stores the received timer event in the blackboard in step 1804. In step 1806, the specialist manager checks specialists called in the timer event from the internal specialist list. In step 1808, the specialist manager calls each specialist (in FIG. 11, a seventh specialist is called).

In step 1810, the seventh specialist sets a timer to, for example, 09:00 AM the next day again. The timer is set again, so that the seventh specialist is repeatedly called everyday and operates. In step 1812, the seventh specialist checks schedule information and determines if the current day is the anniversary. When the current day is not the anniversary, the seventh specialist returns "NO" to the specialist manager in step 1814. However, when the current day is the anniversary, the seventh specialist returns "YES" to the specialist manager in step 1816. Herein, the seventh specialist may transmit information for the anniversary together with "YES".

Then, the specialist manager provides specialist IDs having returned "YES" to the supervisor in step 1818. In step 1820, the supervisor checks priorities of corresponding specialists or checks if the corresponding specialists have been executed. In step 1822, the supervisor transmits results from the check either for a specialist of the highest priority or regarding whether the specialist of the highest priority has been executed to the specialist manager. In step 1824, the specialist manager checks a UI-ID of the specialist of the highest priority or UI-IDs of specialists to be executed. In step 1826, the specialist manager transmits the checked UI-IDs to the agent expression part 140. Then, the agent expression part 140 expresses a corresponding UI. Herein, when the specialist manager transmits the checked UI-IDs to the agent expression part 140, the information for the anniversary is also transmitted. Further, when the agent expression part 140 expresses the UI, the agent expression part 140 expresses both information for the corresponding anniversary and content reporting that the current day is the anniversary.

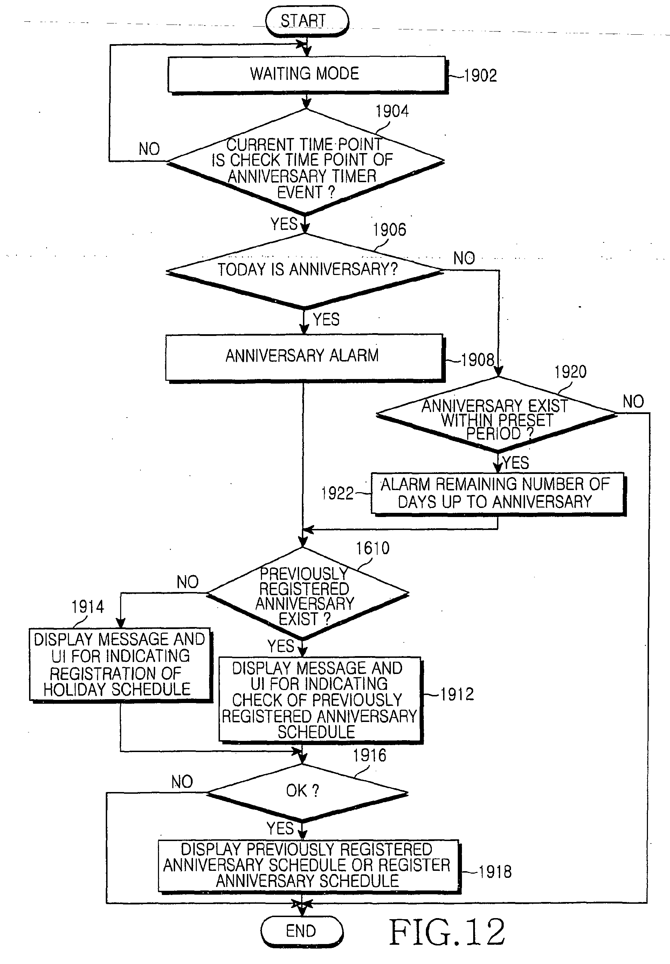

FIG. 12 is a flow diagram illustrating an anniversary timer event processing operation performed by the controller according to an embodiment of the present invention. Referring to FIG. 12, in step 1902, the controller 100 controls the wireless terminal to enter a waiting mode. In step 1904, the controller 100 determines if the current time point is a check time point of an anniversary timer event in the waiting mode. The check time point of the anniversary timer event may be checked at each predetermined time everyday, or may be set to a preset time point before an event for the previously registered anniversary occurs. When the current time point is the check time point of the anniversary timer event, the controller 100 determines if an anniversary, for which an anniversary timer event occurs on the current day, exists in step 1906. When the anniversary exists, the controller 100 executes a timer event for reporting the corresponding anniversary in step 1908. However, when the anniversary does not exist, the controller 100 determines if the anniversary exists within a preset period from the current day in step 1920. When the anniversary exists within the preset period, the controller 100 reports the remaining number of days up to the anniversary in step 1922.

In step 1910, the controller 100 determines if there exists schedules corresponding to the anniversary, which have been registered by a user. When the registered schedules exist, the controller 100 controls the display of a message for indicating the check of the schedules and a character UI corresponding to the message in step 1912. However, when the registered schedules do not exist, the controller 100 controls the display of a message for indicating the registration of schedules and a character UI corresponding to the message in step 1914.

In step 1916, the controller 100 determines if a key used for checking the messages displayed in steps 1912 and 1914 has been input. When the key has been input, the controller 100 registers the schedules or displays the registered schedules in step 1918.

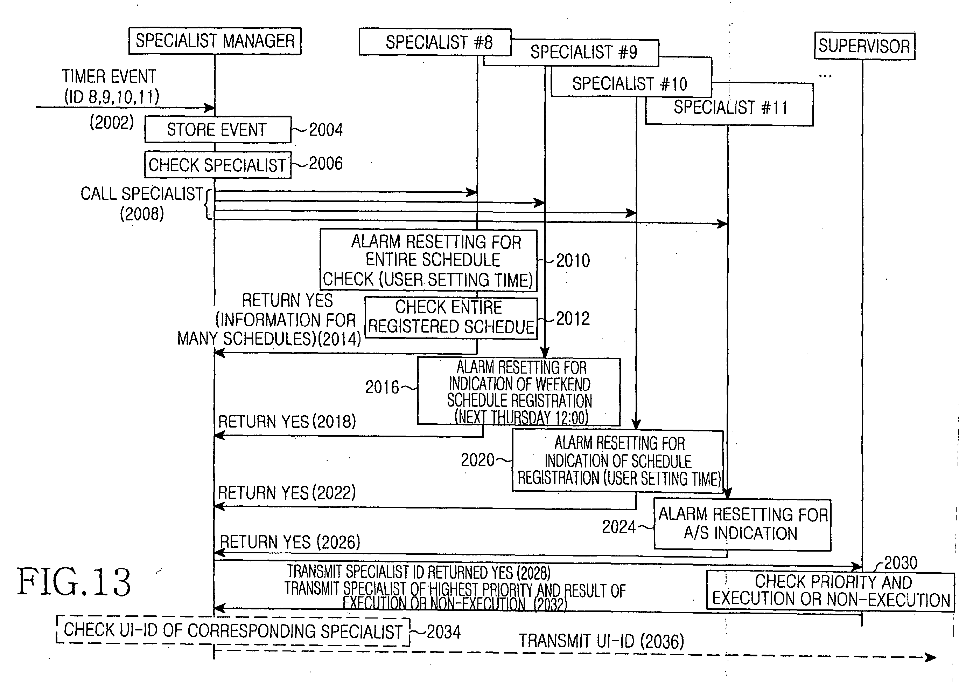

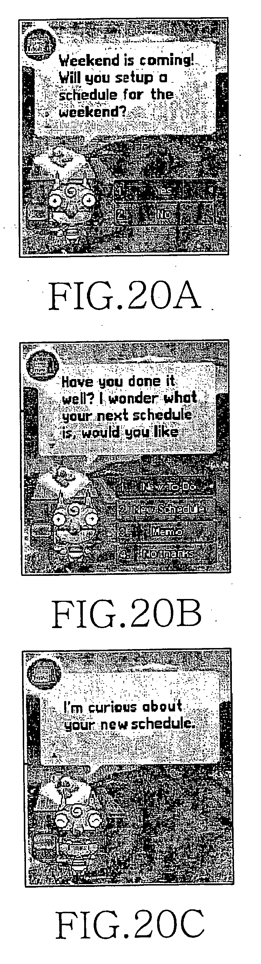

FIG. 13 is a flow diagram illustrating a timer event processing operation for an entire schedule check, weekend schedule registration indication, schedule registration indication and A/S indication in registered schedules, which are performed by the agent function unit according to an embodiment of the present invention. FIGS. 20A-20C are diagrams illustrating screens displayed according to the timer event processing operation for the entire schedule check, the holiday schedule registration indication, the schedule registration indication after a schedule ending and the A/S indication in the registered schedules, which are performed by the agent function unit according to an embodiment of the present invention. Referring to FIGs. 13 and 20A-20C, if timer events (IDs 8, 9, 10 and 11) are transferred in step 2002, the specialist manager stores the received timer events in the blackboard in step 2004. In step 2006, the specialist manager checks specialists called in the timer events from the internal specialist list. In step 2008, the specialist manager calls each specialist. That is, in the case of the timer event (ID 8), an eighth specialist is called. In the case of the timer event (ID 9), an ninth specialist is called. In the case of the timer event (ID 10), an tenth specialist is called. In the case of the timer event (ID 11), an eleventh specialist is called.

The eighth specialist is provided for indicating the check of the entire schedule by a user. In step 2010, the eighth specialist may set a timer to, for example, 09:00 AM the next day again. This timer resetting time may be set by the user in advance. The timer is set again, so that the eighth specialist is called the next day and operates. Accordingly, the eighth specialist is repeatedly called everyday and operates. In step 2012, the eighth specialist checks schedule information and determines that many schedules have been registered. In step 2014, the eighth specialist returns "YES" to the specialist manager. Herein, the eighth specialist may transmit information for reporting that many schedules have been registered together with "YES".

The ninth specialist is provided for indicating the check of the holiday schedule by a user. In step 2016, the timer may be set again to the occurrence time point of the next holiday timer event nearest to the holiday timer event, for which an alarm has been raised, when the holiday timer event occurs. Further, an alarm is raised for a holiday nearest to the current day at each predetermined time or time point, and the alarm is set again in order to indicate the registration of schedules corresponding to the holiday. In this way, the timer is set again, so that the ninth specialist is called on next Thursday and operates. Accordingly, the ninth specialist is repeatedly called at each predetermined time point and operates. In step 2018, the ninth specialist returns "YES" to the specialist manager.

The tenth specialist is provided for indicating the registration of schedules by the user. In step 2020, the timer may be set again in order to indicate the registration of schedules at a time point at which the previously schedule is ended or at a preset time. This timer resetting time may be set by the user in advance. Accordingly, in step 2022, the tenth specialist returns "YES" to the specialist manager.

The eleventh specialist is provided for indicating the A/S of the wireless terminal by the user. In step 2024, an alarm is set again to six months after a time point at which the wireless terminal has been initialized or six months after a time point at which the A/S has been completed. Accordingly, the eleventh specialist is repeatedly called every six months and operates. In step 2026, the tenth specialist returns "YES" to the specialist manager.

Then, the specialist manager provides specialist IDs having returned "YES" to the supervisor in step 2028. In step 2030, the supervisor checks priorities of the corresponding specialists or checks if the corresponding specialists have been executed. In step 2032, the supervisor transmits results from the check either for a specialist of the highest priority or regarding whether the specialist of the highest priority has been executed to the specialist manager. In step 2034, the specialist manager checks a UI-ID of the specialist of the highest priority or UI-IDs of specialists to be executed. In step 2036, the specialist manager transmits the checked UI-IDs to the agent expression part 140. Then, the agent expression part 140 expresses a corresponding UI.

In the UI expressed by the agent expression part 140, for example, in an expression of the UI corresponding to the eighth specialist, it is possible to display content for indicating the check of the currently registered schedules. Specifically, when many schedules have been registered, it is possible to display content for reporting that many schedules have been registered. Further, in an expression of the UI corresponding to the ninth specialist, it is possible to display content for indicating the registration of the holiday schedules. In an embodiment of the present invention, it is assumed for example, that the holiday is a weekend. Accordingly, as illustrated in FIG. 20A, a message for reporting an upcoming weekend and a UI corresponding to the message are displayed. Further, in an expression of the UI corresponding to the tenth specialist, content for indicating the ending of the previously registered schedule is displayed, and content for indicating the registration of the schedules is included, as illustrated in FIG. 20B. When schedules are registered according to a user setting, a screen may be displayed as illustrated in FIG. 20C. The expression of the message and the UI corresponding to the eleventh specialist may include content for indicating the A/S.

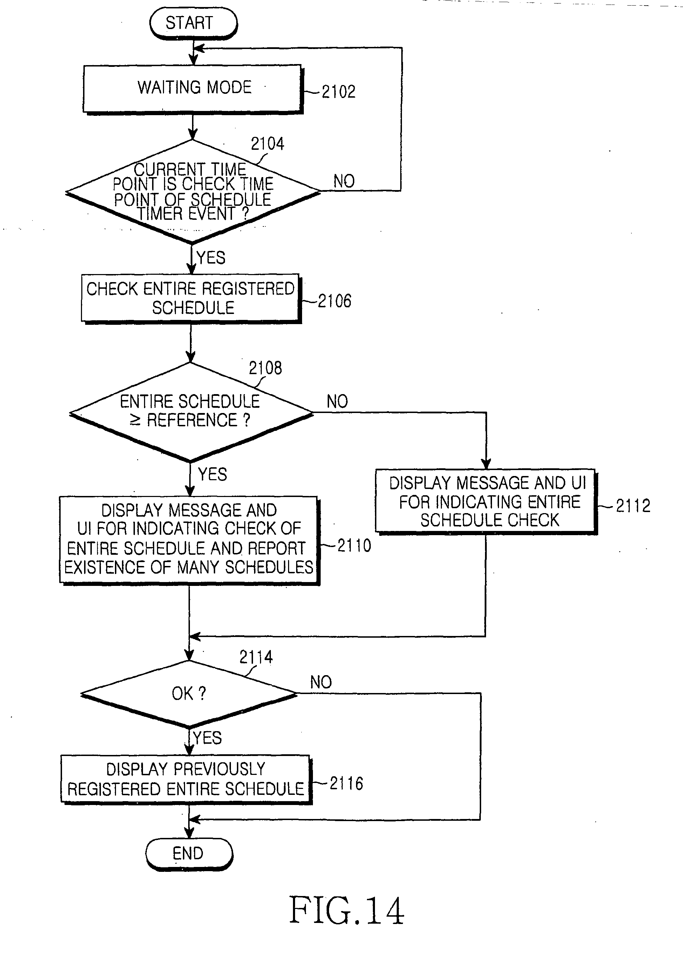

FIG. 14 is a flow diagram illustrating an entire schedule timer event processing operation performed by the controller according to an embodiment of the present invention. Referring to FIG. 14, in step 2102, the controller 100 controls the wireless terminal to enter a waiting mode. In step 2104, the controller 100 determines if the current time point is a check time point of a preset schedule timer event in the waiting mode. The check time point of the schedule may be checked at each predetermined time everyday, or may be checked before a preset period with respect to a schedule existing within a time point nearest from a time point at which the registered schedule exists. When the current time point is the check time point of the schedule, the controller 100 checks the entire schedule registered in the memory 23 in advance in step 2106. In step 2108, the controller 100 determines if the number of preset schedules is larger than that of the previously registered schedules.

When the number of the previously registered schedules is larger than that of the preset schedules, step 2110 is performed. That is, the controller 100 indicates the check of the entire schedule and controls the display of a message for reporting a user's busy schedule due to many registered schedules. However, when the number of the previously registered schedules is smaller than that of the preset schedules, step 2112 is performed. That is, the controller 100 displays a message for indicating the check of the previously registered entire schedule. Then, it is possible to check, delete or add the entire schedule.

In step 2114, the controller 100 determines if a key used for checking the messages displayed in steps 2110 and 2112 has been input. When the key has been input, the controller 100 displays the previously registered entire schedule in step 2116.

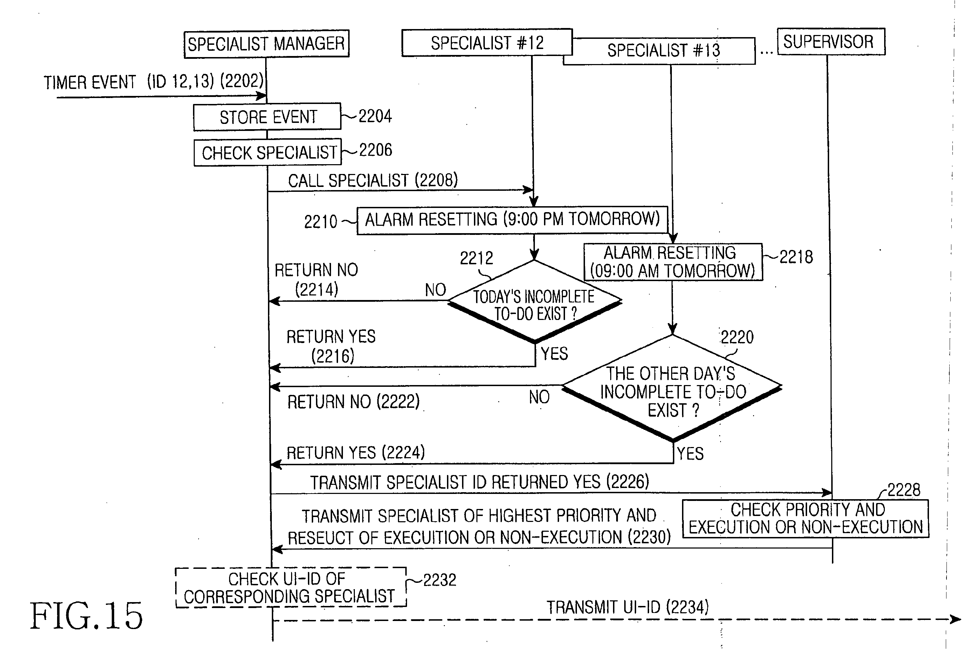

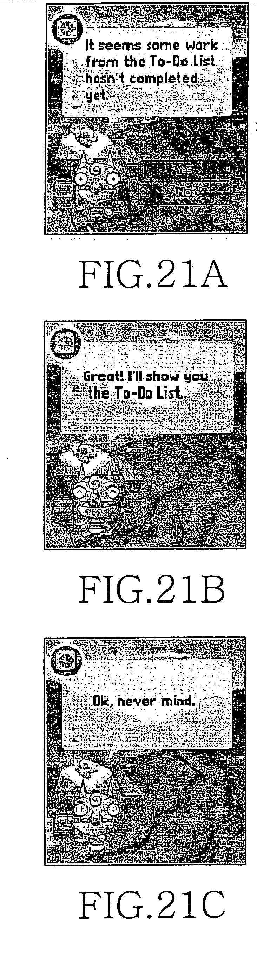

FIG. 15 is a flow diagram illustrating a TO-DO timer event processing operation performed by the agent function unit according to an embodiment of the present invention, and FIGS. 21A-21D are diagrams illustrating screens displayed according to the TO-DO timer event processing operation performed by the agent function unit of an embodiment of the present invention. Referring to FIGs. 15 and 21A-21D, if timer events (IDs 12 and 13) are transferred in step 2202, the specialist manager stores the received timer events in the blackboard in step 2204. In step 2206, the specialist manager checks specialists called in the timer events from the internal specialist list. In step 2208, the specialist manager calls each specialist. That is, in the case of the timer event (ID 12), a twelfth specialist is called. In the case of the timer event (ID 13), a thirteenth specialist is called.

The twelfth specialist is provided for informing a user of whether the current day's TO-DO has been completed. In step 2210, the twelfth specialist may set a timer to, for example, 9:00 PM the next day again. The timer is set again, so that the twelfth specialist is called the next day and operates. Accordingly, the twelfth specialist is repeatedly called everyday and operates. In step 2212, the twelfth specialist checks determine if the current day's incomplete TO-DO exists. When the incomplete TO-DO does not exist, the twelfth specialist returns "NO" to the specialist manager in step 2214. However, when the incomplete TO-DO exists, the twelfth specialist returns "YES" to the specialist manager in step 2216.

The thirteenth specialist is provided for informing a user of whether the other day's TO-DO has been completed. In step 2218, the thirteenth specialist may set a timer to, for example, 09:00 AM the next day again. The timer is set again, so that the thirteenth specialist is called the next day and operates. Accordingly, the thirteenth specialist is repeatedly called everyday and operates. In step 2220, the thirteenth specialist checks determine if the other day's incomplete TO-DO exists. When the incomplete TO-DO does not exist, the thirteenth specialist returns "NO" to the specialist manager in step 2222. However, when the incomplete TO-DO exists, the thirteenth specialist returns "YES" to the specialist manager in step 2224.

Then, the specialist manager provides specialist IDs having returned "YES" to the supervisor in step 2226. In step 2228, the supervisor checks priorities of the corresponding specialists or checks if the corresponding specialists have been executed. In step 2230, the supervisor transmits results from the check either for a specialist of the highest priority or regarding whether the specialist of the highest priority has been executed to the specialist manager. In step 2232, the specialist manager checks a UI-ID of the specialist of the highest priority or UI-IDs of specialists to be executed. In step 2234, the specialist manager transmits the checked UI-IDs to the agent expression part 140. Then, the agent expression part 140 expresses a corresponding UI.

In the UI expressed by the agent expression part 140, for example, in an expression of the UI corresponding to the twelfth specialist, it is possible to display content for checking if the current day's TO-DO has been completed as illustrated in FIG. 21 A. In an expression of the UI corresponding to the thirteenth specialist, it is possible to display content for checking if the other day's TO-DO has been completed. Further, it is possible to insert a list regarding whether the TO-DO has been completed, which may be selected by a user, into content for checking if the TO-DO has been completed. Accordingly, after the user selects whether the TO-DO has been completed, the agent expression part 140 may display a list of the previously registered TO-DO or an encouragement message, and UI as illustrated in FIG. 20B or 20C.

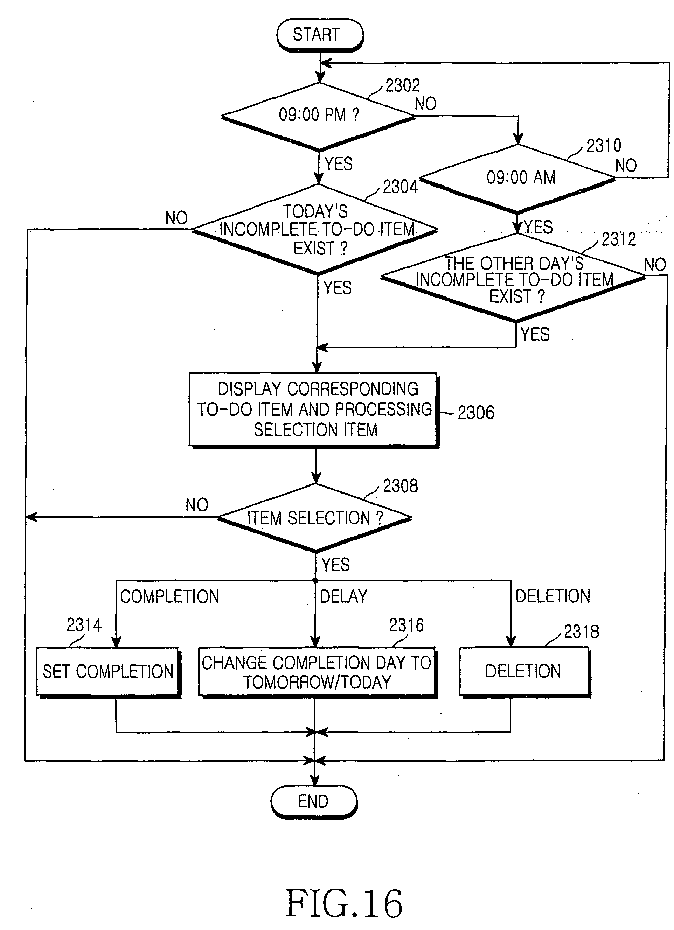

FIG. 16 is a flow diagram illustrating a TO-DO processing operation performed by the controller according to an embodiment of the present invention. Referring to FIG. 16, a user selects an item for registering TO-DO from various environment setup menus of the wireless terminal by operating a menu key, a direction key or a number key provided to the wireless terminal. Accordingly, the controller 100 executes a mode necessary for registering TO-DO, and the display unit displays a screen for guiding input of content, importance, time limit, and so forth, of the TO-DO, and displays a window used for inputting corresponding information. Further, the controller 100 receives setting items of the TO-DO selected through an operation of a character key or the number key from the user, and stores the setting items in the memory 23. Accordingly, the TO-DO is stored, so that the user can view the stored TO-DO by operating the keys at any time.

The controller 100 can determine if the registered TO-DO has been completed. The determination function of the controller 100 may be performed at a time set by the user, or a given time set by the terminal. In an embodiment of the present invention, it is assumed for example, that whether the registered TO-DO has been completed is determined at 09:00 AM and 9:00 PM. Accordingly, the controller 100 determines if the determination time has arrived at 9:00 PM in step 2302. When the determination time has arrived at 9:00 PM, the controller 100 determines if the current day's incomplete TO-DO items exist among the registered TO-DO items in step 2304.

When the incomplete TO-DO items exist among the registered TO-DO items at 9:00 PM, the controller 100 controls the incomplete TO-DO items to be displayed in a text form. Further, the controller 100 controls an avatar for reporting the incomplete TO-DO to be displayed. In step 2306, the controller 100 displays items "completion", "postponement" and "deletion" used when a user changes the setting state of the incomplete TO-DO items. In step 2308, the controller 100 determines if a user has selected the incomplete TO-DO item and the item "completion" for the selected TO-DO item. When the user has selected the item "completion" in step 2308, the controller 100 determines that the incomplete TO-DO item has been already completed and displays a message for reporting the completion of the incomplete TO-DO item in step 2314.

When the user selects the item "postponement" in step 2308, the controller 100 changes the completion date of the TO-DO item to the next day, displays a message for reporting the change of the completion date, and displays a message for reporting existence of the incomplete TO-DO item in step 2316. When the user selects the item "deletion" in step 2308, the controller 100 deletes the selected incomplete TO-DO item in step 2318.

As a result of the determination in step 2302, when the determination time has not arrived at 9:00 PM, the controller 100 determines if the determination time has arrived at 09:00 AM in step 2310. When the determination time has arrived at 09:00 AM, the controller 100 determines if the other day's incomplete TO-DO items exist among the previously registered TO-DO items in step 2312. When the other day's incomplete TO-DO items exist, the controller 100 displays the incomplete TO-DO items. The subsequent steps are substantially equal to steps 2306, 2308, 2314, 2316 and 2318 as described above, excepting that the other day's incomplete TO-DO items are processed.

As described above, in the exemplary embodiments of the present invention, the operations under the control of the agent function unit and the controller are described. However, the schedule-related event processing by the controller can be performed by the specialist of the agent function unit, and messages and UIs associated with user feedback can be displayed through the agent expression part.

Although exemplary embodiments of the present invention have been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. An apparatus for processing schedule-related events in a wireless terminal, the apparatus comprising:
a memory for storing a character UI image according to the schedule-related events;
an event collector for collecting the schedule-related events, and generating event messages for identifying the schedule-related events;
an event controller for proving a plurality of specialists for the schedule-related event, determining a specialist corresponding to the event message among the specialists, and selecting and outputting a character UI based on the schedule-related event, which is included in the determined specialist; and
an agent expression part for accessing and outputting a character image and a text corresponding to the character UI based on the schedule-related event.

2. The apparatus as claimed in claim 1, wherein the event controller comprises:
a specialist for setting a timer event according to a beginning time or an ending time of a previously registered schedule, and displaying both a message for indicating change of a reception notification mode and a character corresponding to the message when the timer event occurs.

3. The apparatus as claimed in claim 1, wherein the event controller further comprises:
a specialist for determining if a beginning time or an ending time of a previously registered schedule overlaps with another schedule when a current time is the beginning time or the ending time of the previously registered schedule, determining a change time point of a reception notification mode when the time of the schedule overlaps with another schedule, and displaying both a message for indicating no change of a reception notification mode and a character corresponding to the message when a current time is the change time point.

4. The apparatus as claimed in claim 1, wherein the event controller comprises:
a specialist for raising an alarm for an ending of a previously registered schedule when an alarm event occurs according to an ending time of the previously registered schedule, displaying a list of schedule-related menus when raising the alarm, receiving at least one menu selected from the schedule-related menus, and displaying both a message for indicating an addition of an item corresponding to the received menu and a character corresponding to the message.

5. The apparatus as claimed in claim 4, wherein the schedule-related menu comprises at least one of a memo, a schedule registration, a registration of things to do, a check of a previously registered schedule, and an ending of a schedule alarm.

6. The apparatus as claimed in claim 1, wherein the event controller comprises:
a specialist for setting a timer event at a point before a predetermined period of a previously registered holiday or on the holiday, raising an alarm for a remaining number of days up to the holiday according to an occurred timer event, or displaying both a message for reporting that a day is the holiday and a character corresponding to the message.

7. The apparatus as claimed in claim 1, wherein the event controller comprises:
a specialist for displaying content for indicating an addition of a schedule of a holiday when a holiday alarm event occurs, or displaying both a message for indicating a check of a previously registered schedule existing in the holiday and a character corresponding to the message.

8. The apparatus as claimed in claim 1, wherein the event controller comprises:
a specialist for setting a timer event for an alarm at a point before a predetermined period of a previously registered anniversary or on the anniversary, raising an alarm for a remaining number of days up to the anniversary according to an occurred timer event, or displaying both a message for reporting that a day is the anniversary and a character corresponding to the message.

9. The apparatus as claimed in claim 1, wherein the event controller comprises:
a specialist for displaying content for indicating an addition of a schedule of an anniversary when an anniversary alarm event occurs, or displaying both a message for indicating check of a previously registered schedule existing in the anniversary and a character corresponding to the message.

10. The apparatus as claimed in claim 1, wherein the event controller is configured to check previously registered schedules at a preset time point, and display both a message for indicating check of the registered schedules and a character corresponding to the message when a number of the registered schedules is larger than a number of preset schedules.

11. The apparatus as claimed in claim 1, wherein the event controller is configured to check a list of things to do, which is set by a user, at a preset time point, and display both a list of incomplete things to do and a character corresponding to the list when the incomplete things to do exists at the time point.

12. The apparatus as claimed in claim 1, wherein the memory is configured to:
store a character image for reporting a beginning and an ending of a schedule, a character image for indicating a change of a reception notification mode, a character image for indicating a registration of another schedule, things to do and a memo according to the ending of the schedule, a character image for reporting a holiday and indicating an addition of a schedule to the holiday, a character image for indicating a check of a schedule previously registered in the holiday and the registered schedule, a character image for reporting an anniversary and indicating an addition of a schedule to the anniversary, a character image for indicating a check of a schedule previously registered in the anniversary and the registered schedule, and a character image for indicating a check of previously registered things to do and completion or incompletion of the things to do.

13. A method for processing schedule-related events in a wireless terminal, the method comprising the steps of:
storing schedule-related events when the schedule-related events occur;
checking preset specialists in order to process each schedule-related event;
calling the checked specialists and allowing the specialists to process the schedule-related events; and
checking processing results according to the specialists having processed the schedule-related events, and displaying processing result-related expressions preset according to the specialists based on the processing results.

14. The method as claimed in claim 13, wherein the specialists for processing schedule beginning and ending alarm events among the schedule-related events correspond to a first specialist and a second specialist, the method further comprising the steps of:
controlling the first specialist to generate the schedule beginning alarm event at a beginning time of a preset schedule, determine if a current reception notification mode is a first mode, and display both a message for indicating a change of the reception notification mode to a second mode and a character corresponding to the message; and
controlling the second specialist to generate the schedule ending alarm event at an ending time of a preset schedule, determine if the current reception notification mode is the second mode, and display both a message for indicating a change of the reception notification mode to the first mode and a character corresponding to the message.

15. The method as claimed in claim 13, wherein, when the second specialist indicates a change of the reception notification mode from a second mode to a first mode according to a generation of a schedule ending alarm event, the method further comprises the steps of:
controlling a third specialist to display a schedule-related list comprising menus of another schedule, a memo, and things to do when the schedule ending alarm event is generated; and
controlling the third specialist to display both a message for indicating an addition of at least one item in the list and a character corresponding to the message, receive at least one item selected by a user, and execute a function for the received item.

16. The method as claimed in claim 15, wherein, when the memo menu is selected, the method further comprises the steps of:
controlling the second specialist to display a sub-menu comprising at least one of a voice memo, audio memo and text memo items; and
controlling the second specialist to operate at least one of a camera and a microphone connected to an audio processor according to a selected item.

17. The method as claimed in claim 13, further comprising the steps of:
controlling a first specialist and a second specialist to check existence of another schedule before the schedule beginning and ending alarm events are generated, and display a message for indicating a change of the mode at a time point at which the overlapping schedule is ended; and
controlling a third specialist to display both a message for indicating an addition of a schedule and a character corresponding to the message at the time point at which the overlapping schedule is ended.

18. The method as claimed in claim 13; wherein a first mode corresponds to a bell mode and a second mode corresponds to a vibration mode.

19. The method as claimed in claim 13, further comprising a step of:
when a fourth specialist displays a mode change indication message, preventing the message from being displayed if a user does not change the mode more than a preset number of times.

20. The method as claimed in claim 13, further comprising the steps of:
controlling a fourth specialist to automatically change a corresponding mode when schedule beginning and ending alarm events are generated, and display both a message for reporting the changed mode and a character corresponding to the message.

21. The method as claimed in claim 13, wherein the specialists for processing a holiday alarm event among the schedule-related events correspond to a fifth specialist and a ninth specialist, the method further comprises the steps of:
controlling the fifth specialist to check a previously registered holiday, set an alarm event for a corresponding holiday before a preset time point, generate the holiday alarm event at a generation time point of the holiday alarm event, and display both a message according to the holiday alarm event and a character corresponding to the message; and
controlling the ninth specialist to determine if a schedule of the previously registered holiday exists when the holiday alarm event is generated, display the previously registered schedule, or display both a message for indicating a registration of a schedule and a character corresponding to the message.

22. The method as claimed in claim 13, wherein the specialists for processing an anniversary alarm event among the schedule-related events correspond to a sixth specialist and a tenth specialist, the method further comprises the steps of:
controlling the sixth specialist to determine if an anniversary preset by a user exists, set an alarm event for the corresponding anniversary before a preset time point, raise an alarm for the corresponding anniversary when the alarm event is generated, and display both a message according to the anniversary and a character corresponding to the message; and
controlling the tenth specialist to determine if a preset schedule corresponding to the anniversary exists when the alarm event is generated, display the preset schedule, or display both a message for indicating a registration of a schedule and a character corresponding to the message.

23. The method as claimed in claim 22, further comprising the steps of:
controlling a seventh specialist for processing an alarm event at the corresponding anniversary to determine if the anniversary preset by the user exists, set an alarm so that the alarm event occurs at the corresponding anniversary when the anniversary exists, and display both a message for reporting the corresponding anniversary and a character corresponding to the message when the corresponding anniversary comes.

24. The method as claimed in claim 13, wherein the specialist for processing an A/S alarm event among the schedule-related events corresponds to an eleventh specialist, the method further comprises the steps of:
controlling the eleventh specialist to check a status and A/S information of the wireless terminal after predetermined time periods, and display both a message for indicating the status and the A/S of the wireless terminal and a character corresponding to the message according to results of the check.

25. The method as claimed in claim 13, wherein the specialists for processing a things-to-do (TO-DO) alarm event among the schedule-related events correspond to a twelfth specialist and a thirteenth specialist, the method further comprises the steps of:
controlling the twelfth specialist to check a current day's TO-DO registered in advance at a first preset time, and display both a message for reporting existence of the current day's incomplete TO-DO and a character corresponding to the message when the current day's incomplete TO-DO exists as a result of the check; and
controlling the thirteenth specialist to check the other day's TO-DO at a second preset time, and display both a message for reporting existence of the other day's incomplete TO-DO and a character corresponding to the message when the other day's incomplete TO-DO exists as a result of the check

26. The method as claimed in claim 25, wherein the messages for reporting the existence of the incomplete TO-DO are displayed and allow a status of the incomplete TO-DO to be changed to a deletion and allow an addition or change of a completion time point by a user.

27. A method for processing schedule-related events in a wireless terminal, the method comprising the steps of:
determining if registered schedules exist;
determining if a schedule satisfying schedule alarm conditions exists among the registered schedules and when the schedule satisfying the schedule alarm conditions exists, raising an alarm for the schedule and displaying a message for indicating a change of a reception notification mode according to the schedule; and
receiving a setting regarding whether to change the reception notification mode and changing the reception notification mode if instructed to do so.

28. The method as claimed in claim 27, further comprising the steps of:
when an alarm satisfying the schedule conditions and reporting a beginning of a schedule is generated, displaying a message for indicating a change of a reception notification mode to a vibration mode; and
when an alarm satisfying the schedule conditions and reporting an ending of the schedule is generated, displaying a message for indicating a change of the reception notification mode to a bell mode.

29. The method as claimed in claim 27, further comprising the steps of:
when the message for indicating the change of the mode is displayed, not displaying the message if a user does not change the mode more than a preset number of times.

30. The method as claimed in claim 27, further comprising the steps of:
when another schedule overlaps before the schedule for which the alarm has raised is ended, not displaying the message for indicating the change of the mode; and
after the overlapping schedule is ended, displaying the message for indicating the change of the mode.

31. The method as claimed in claim 27, further comprising the steps of:
when schedule beginning and ending alarms are generated, not displaying the message for indicating the change of the mode and changing the mode automatically to a preset mode.

32. The method as claimed in claim 27, further comprising the steps of:
when a schedule ending alarm is generated, displaying a schedule-related menu comprising menus of a memo registration, a schedule registration, a TO-DO registration and a schedule check; and
receiving at least one menu selected from the displayed menus, and executing a menu corresponding to the received menu.

33. The method as claimed in claim 32, further comprising the steps of:
when the memo registration menu is selected, displaying sub-items including an image memo, an audio memo and a text memo; and
operating a camera when the image memo item is selected, operating a microphone when the audio memo item is selected, and performing a change to an input mode when the text memo item is selected.

34. A method for processing schedule-related events in a wireless terminal, the method comprising the steps of:
determining if registered anniversaries exist;
when an anniversary satisfying anniversary alarm conditions exists among the registered anniversaries, raising an alarm for the anniversary;
displaying at least one message for reporting both a schedule registration according to the anniversary and requesting whether to add other anniversaries when raising the alarm for the anniversary; and
adding said other anniversaries, and registering and storing a schedule according to a user setting.

35. The method as claimed in claim 34, further comprising the steps of:
performing the raising of the alarm for the anniversary either at a preset time point before the anniversary or at a preset time on the anniversary; and
setting an alarm to an anniversary nearest to the anniversary for which the alarm has raised, among the registered anniversaries at an ending time point of the alarm.

36. A method for processing schedule-related events in a wireless terminal, the method comprising the steps of:
determining if registered holidays exist;
when a holiday satisfying holiday alarm conditions exists among the registered holidays, raising an alarm for the holiday;
displaying a message for reporting whether to register a schedule according to the holiday when raising the alarm for the holiday; and
registering and storing a schedule of the holiday according to a user setting.

37. The method as claimed in claim 36, further comprising the steps of:
performing the raising of the alarm for the holiday either at a preset time point before the holiday or at a preset time on the holiday; and
setting an alarm to a holiday nearest to the holiday for which the alarm has raised, among the registered holidays at an ending time point of the alarm.

38. A method for processing schedule-related events in a wireless terminal, the method comprising the steps of:
checking registered TO-DO items;
determining if incomplete TO-DO items exist among the TO-DO items; and
when the incomplete TO-DO items exist, displaying the incomplete TO-DO items at time points at which existence of the incomplete TO-DO items are reported.

39. The method as claimed in claim 38, further comprising the steps of:
displaying a current day's incomplete TO-DO item or another day's incomplete TO-DO item according to the time points at which the incomplete TO-DO items are reported.

40. The method as claimed in claim 38, wherein an item selected by a user from the incomplete TO-DO items is deleted, or a completion time point of a TO-DO item is changed and stored.
